# EUROPEAN PATENT SPECIFICATION

(11) **EP 4 304 812 B1**
(45) Date of publication and mention of the grant of the patent: **01.10.2025**
(21) Application number: 22714538.0
(22) Date of filing: 08.03.2022
(51) Int. Cl.: B25B 25/00, A01G 17/08, F16G 11/00

(54) **TOOL FOR MOUNTING AN ELEMENT FOR THE REVERSIBLE CLASPING OF A METAL WIRE ON A STAKE FOR PLANTS**
WERKZEUG ZUR BEFESTIGUNG EINES ELEMENTS ZUM LÖSBAREN KLEMMEN EINES METALLDRAHTS AN EINEM PFAHL FÜR PFLANZEN
OUTIL PERMETTANT LE MONTAGE D'UN ÉLÉMENT DE SERRAGE RÉVERSIBLE D'UN FIL MÉTALLIQUE SUR UN TUTEUR POUR VÉGÉTAUX

(30) Priority: 09.03.2021 IT 202100005516; 04.06.2021 IT 202100014546
(43) Date of publication of application: 17.01.2024
(73) Proprietor: Bortolussi, Claudio, 33080 Fiume Veneto (PN) (IT); Bortolussi, Franco, 33080 Fiume Veneto (PN) (IT)
(72) Inventor: Bortolussi, Claudio, 33080 Fiume Veneto (PN) (IT); Bortolussi, Franco, 33080 Fiume Veneto (PN) (IT)
(74) Representative: Giugni, Diego
(86) International application number: PCT/IB2022/052059
(87) International publication number: WO 2022/189973

(56) References cited:
- GB-A- 1 559 543
- US-A1- 2011 214 538

## Description

### TECHNICAL FIELD OF THE INVENTION

The present invention relates to a tool for mounting a reversible clasping element of a metal wire or made of plastic on a stake for plants. Furthermore, the invention relates to a method for reversibly clasping a load-bearing wire on a stake for plants comprising the use of said tool and, more generally, a method for constructing a support system for plants comprising the use of said tool.

### STATE OF THE PRIOR ART

In the agricultural cultivation field, constructing systems for support fruit plants along rows is known. Such systems generally consist of a vertical grid consisting of a plurality of posts driven vertically into the ground connected to each other by means of movable wires and/or fixed stretched horizontally. Said posts are conventionally distinguished into head posts on which said wires are constrained, in a movable or fixed manner, and intermediate posts arranged in a row between said head posts to guide the wires. This grid has the fundamental function of supporting branches, shoots or fruit canes of the plants so as to support them during their growth and allow the best exposure of the leaves and fruits to the sun, so as to obtain optimal cultivation conditions.

The load-bearing structure of the grid is then completed, especially in the case of vines, by stakes for supporting portions of the wooden trunk of the plant, that is the portion not carrying leaf branches. Stakes are substantially rigid and extended elements that are driven into the ground beside the plant and they may have a cylindrical, oval, quadrangular, triangular, T-shaped cross-section, all substantially even should the stake be made of metal material, plastic material or other pre-formed material. Alternatively, in the case of stakes made of wooden material, the shapes may be similar to those specified above but uneven.

One or more metal or fixed plastic wires are then stretched horizontally between said stakes and reversibly constrained thereto, so as to allow to bind the fruit cane along said wires to sustain it during the growth of the branches which will carry leaves and fruits.

Various methods are generally used to connect the vertical stakes with the fixed wires which extend horizontally in a stable and stationary manner.

The first of these methods requires the use of common pieces of metal wire which is wound around the region where each horizontal wire crosses each vertical stake, so that each piece of wire is therefore fastened and locked by means of lock pins, grippers or pincers so as to keep the horizontal wire and the vertical stake firmly joined together.

Another method provides for the use of vertical clasping elements consisting of vertical hooks provided with a saddle-like portion suitable to rest on a circle arc of a stake, connected to two folds each suitable to receive a portion of a horizontal wire symmetrically with respect to the stake and on the opposite side thereof with respect to the engagement of the saddle-like portion. Two straight arms then extend parallel to each other and with respect to the stake and terminate with two arched ends suitable to engage the stake on the same side as the saddle-like portion. Such element is for example described in patent EP1954118.

This element resolves most of the aforementioned drawbacks and it allows to tightly fasten the wire on the stake. It should be observed that the mounting thereof requires a certain level of attention given that each of the two arms and relative arched ends must be handled individually and correctly. This obviously entails a given expenditure of time and fine dexterity that the operator must acquire through practice. Furthermore, the manual mounting after a few pieces becomes basically impossible due to the stress and pressure to which the fingers are subjected. Otherwise, the use of an accessory such as screwdriver or a curved hook on the one hand does not entirely eliminate the use of the fingers and - on the other hand - if handled incorrectly, it could stress the two arms jeopardising the tightness thereof on the stake. In other words, should the deformation of the two arms not be well calibrated, both the mounting using accessories or even manually easily causes a weak fastening of the hook.

US2011/214538A1 discloses a pair of pliers with dual functions for snap ring, comprising a jaw assembly which is installed onto connecting ends and adapted to couple to a ring, said connecting ends being provided with tips adapted to engage with an orifice of each of the two clamped ends of the ring.

### SUMMARY OF THE INVENTION

Therefore, the technical problem underlying the present invention lies in providing a tool that avoids the stressing of the hook and simultaneously allows a fast and easy mounting without difficult operations for the operator.

Such problem is resolved by a tool with the features of claim 1, which is a tool for mounting an element for the elastic and reversible clasping of horizontal metal or plastic wires on vertical stakes provided with a mechanism which allows to mount the element in a quick and safe manner even by non-specialised personnel.

Therefore, a first object of the present invention is a tool for mounting an element for the elastic and reversible clasping of horizontal metal wires on vertical stakes that is particularly easy to handle.

A second object is a tool that does not cause fatigue to the operator.

A third object is a tool calibrated so as not to cause excessive and harmful stresses to the clasping element.

A further object is a method for constructing a grid for supporting fruit plants comprising the fixing of a horizontal wire on a vertical stake by applying a clasping element mounted with the aforementioned tool.

### BRIEF DESCRIPTION OF THE FIGURES

Further characteristics and advantages of the tool for mounting an element for cross-like clasping horizontal metal wires on vertical stakes for supporting a row of plants according to the invention will be more apparent from the following description of some embodiments provided strictly by way of example with reference to the following figures, wherein:
- figure 1 is an axonometric view of a tool for mounting an element for clasping a wire on a stake for plants of the invention, according to a first embodiment of the present invention;
- figure 2 is an axonometric view of the tool of figure 1 from a different angle;
- figure 3 is a plan view of a detail of the tool of figure 1;
- figure 4 is an axonometric view of a first step for mounting the element for clasping a horizontal wire on a stake for plants using the tool of figure 1;
- figure 5 is an axonometric view of a second step for mounting the clasping element;
- figure 6 is an axonometric view of a third step for mounting the clasping element;
- figure 7 is an axonometric view of a fourth step for mounting the clasping element;
- figure 8 is an axonometric view of a fifth step for mounting the clasping element;
- figure 9 is an axonometric view of a step for releasing the tool of figure 1 after mounting the clasping element;
- figure 10 is an axonometric view of the clasping element mounted on a stake in the condition for clasping a load-bearing wire;
- figure 11 is an axonometric view of a tool for mounting an element for clasping a wire on a stake for plants, according to a second embodiment of the present invention;
- figure 12 is an axonometric view of the tool of figure 11 from a different angle;
- figure 13 is a plan view of a detail of the tool of figure 11;
- figure 14 is an axonometric view of a first step for mounting the element for clasping a horizontal wire on a stake using the tool of figure 11;
- figure 15 is an axonometric view of a second step for mounting the clasping element of figure 11;
- figure 16 is an axonometric view of a third step for mounting the clasping element of figure 11;
- figure 17 is an axonometric view of a fourth step for mounting the clasping element of figure 11;
- figure 18 is an axonometric view of a fifth step for mounting the clasping element of figure 11;
- figure 19 is an axonometric view of a step for releasing the tool of figure 11 after mounting the clasping element;
- figure 20 is an axonometric view of the tool of figure 11 according to a first variant;
- figure 21 is an axonometric view of the tool of figure 11 according to a second variant;
- figure 22 is an axonometric view of a tool for mounting an element for clasping a wire on a stake for plants, according to a third embodiment of the present invention;
- figure 23 is an axonometric view of a detail of the tool of figure 22;
- figure 24 is an axonometric view of a tool for mounting an element for clasping a wire on a stake for plants, according to a variant of the third embodiment of figure 22;
- figure 25 is a front axonometric view of a tool for mounting an element for clasping a wire on a stake for plants, according to a fourth embodiment of the present invention;
- figure 26 is a rear axonometric view of the tool of figure 25;
- figure 27 is an axonometric view of a first step for mounting the element for clasping a horizontal wire on a stake using the tool of figure 25;
- figure 28 is an axonometric view of a second step for mounting the element for clasping a horizontal wire on a stake using the tool of figure 25;
- figure 29 is an axonometric view of a third step for mounting the element for clasping a horizontal wire on a stake using the tool of figure 25;
- figure 30 is an axonometric view of a fourth step for mounting the element for clasping a horizontal wire on a stake using the tool of figure 25.

### DETAILED DESCRIPTION OF THE INVENTION

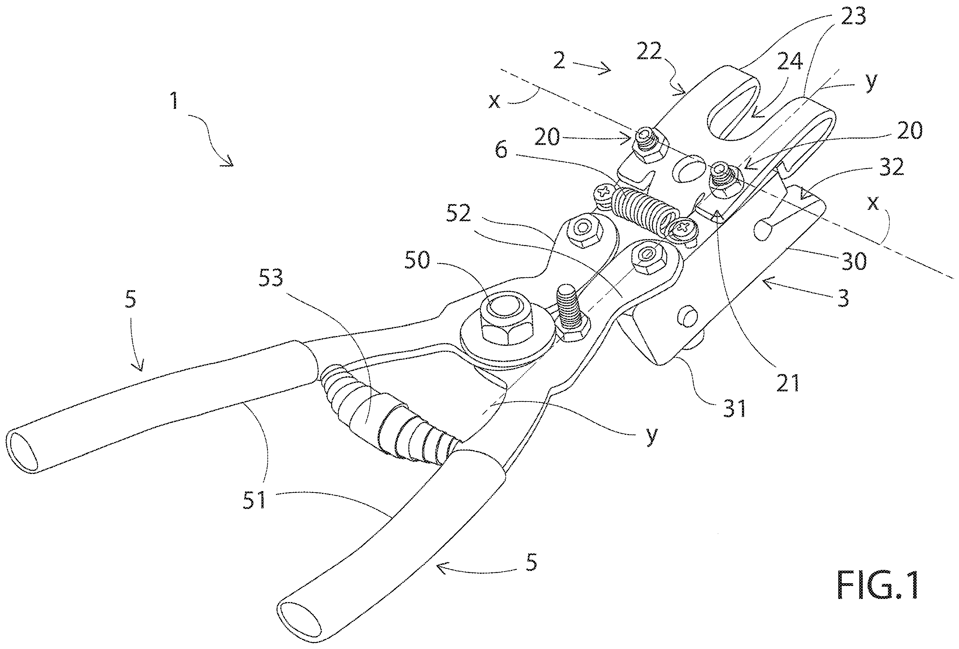

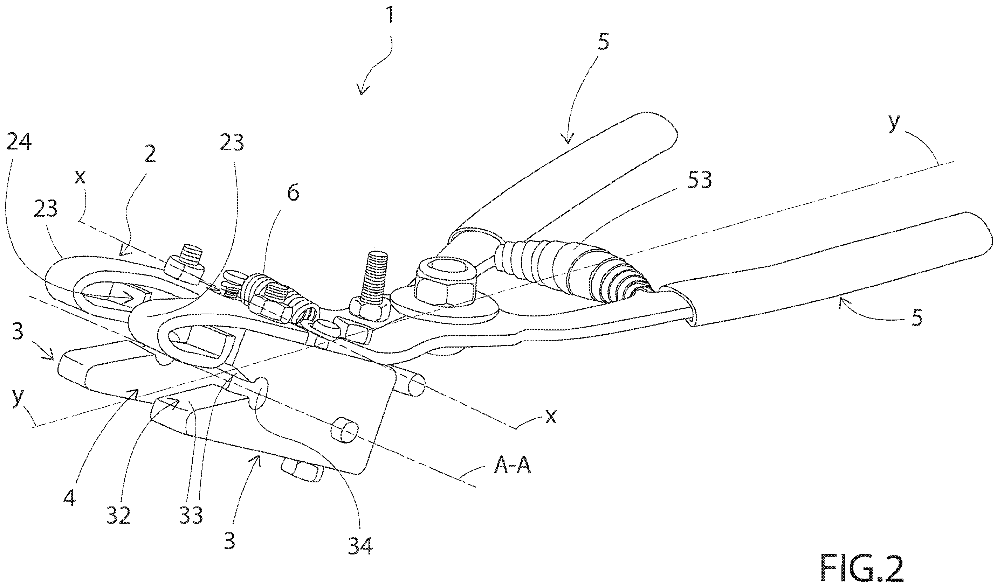

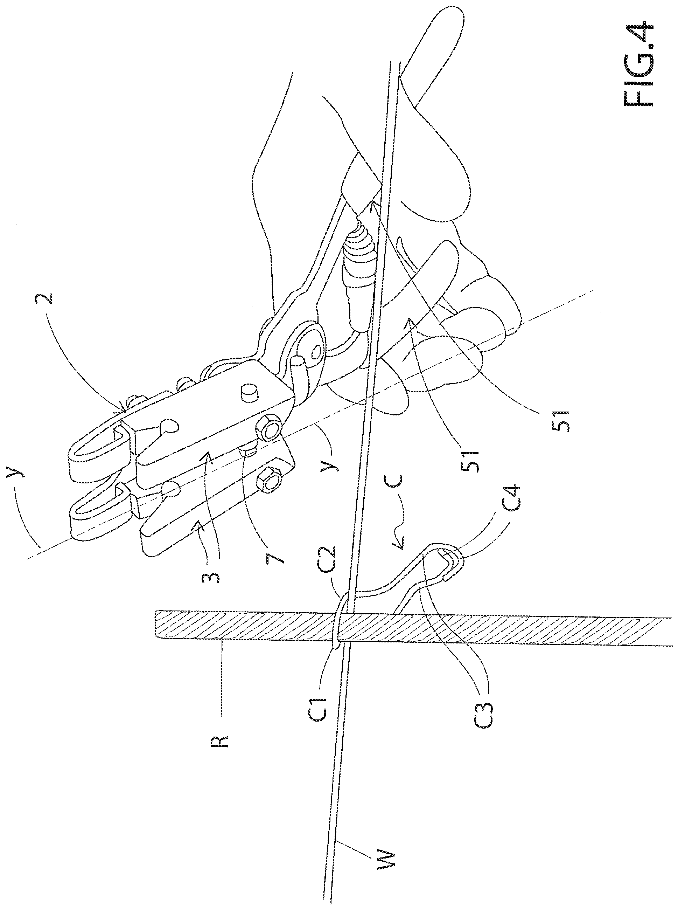

With reference to figures 1 and 2, a tool for mounting an element for the reversible clasping of a wire on a stake for plants is indicated with reference numeral 1. The tool 1 comprises a support 2 for a pair of elements 3 for engagement with said clasping element (shown in figures 4-9). In particular, the engagement elements 3 are mounted on said support 2 parallel, separated by a space 4 and rotatable on the same plane spacing apart. A pair of actuator elements 5 can then be actuated to rotate said engagement elements 3 spacing them apart. Furthermore, an elastic element 6 is fixed on the engagement elements 3 for the return thereof in inoperative position after they have been spaced apart by said actuator elements 5. In addition, the engagement elements 3 each comprise a hooking means 7 (figure 4) to elastically deform said clasping element during the spacing apart of said engagement elements and, preferably, to reversibly retain an arm of said clasping element during the mounting thereof on the stake. Said hooking means 7 are directed in the space 4 defined by said engagement elements 3.

The support 2 generally consists of a bridge-like element which rotatably supports and connects the pair of engagement elements 3. Preferably, the support is a plate with two holes (not indicated) for engagement with the rotation pins 20 of said engagement elements 3. In particular, the support is fixed on a part of the engagement elements by means of said pins, one on each of the elements so that, when inoperative, the elements are parallel and spaced from each other by a pre-established space 4 for housing the clasping element, as described hereinafter. The pins 20 are aligned to each other along an orthogonal axis X-X with respect to the extension axis Y-Y of said space 4 or of the engagement elements.

Preferably, the support is a plate with a first bridge-like portion 21 between said engagement elements 3 and provided with said holes for said pins 20, and a second portion 22 provided with a fork 23 which delimits a space 24 for centring the stake R, as explained hereinafter.

The engagement elements 3 are generally a kind of guide for the element C for clasping a wire W for supporting plant trellis on a stake R for plants. As a matter fact, they are used to guide the clasping of the element C on the stake R automatically without the manual intervention of the operator. In particular, each element 3 is an arm provided with a first end 30 fixed to the support 2 with a pin 20 and a second end 31 fixed to an actuator element 5.

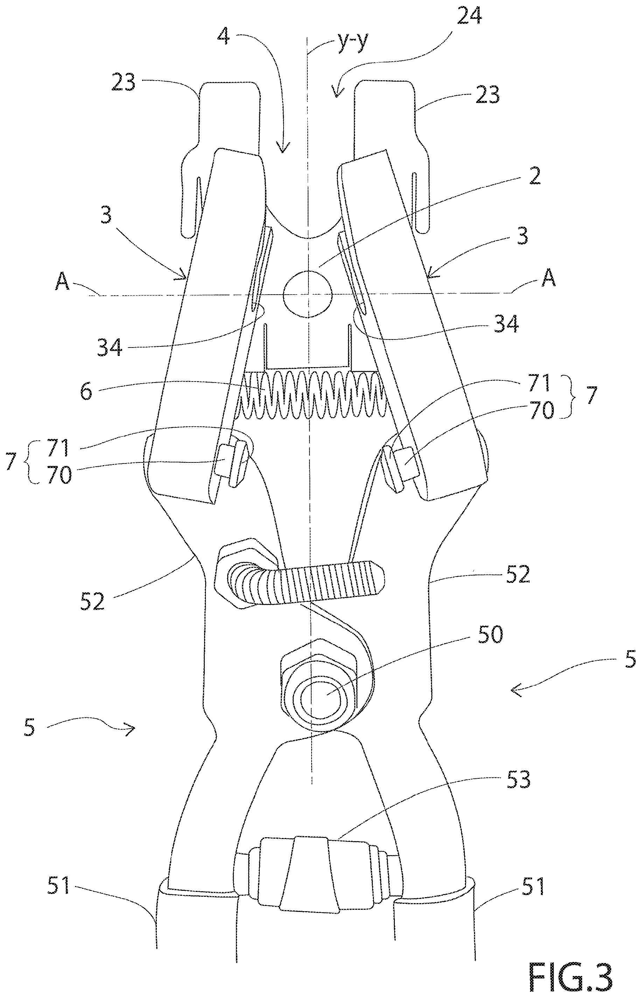

Furthermore, the first end 30 is provided with an opening 32 for housing a load-bearing wire W to be fixed to the stake R with the aforementioned clasping element C. Preferably, the opening 32 has a first section 33 for piloting the insertion of the wire terminating into the semi-cylindrical-shaped recess 34. It should be observed that the semi-cylindrical recesses 34 of each second portion extends along a common axis A-A (figure 3) parallel to the extension axis Y-Y of the space 4 between the two engagement elements 3. Furthermore, each branch of the aforementioned fork 23 of the second portion 22 of the support 2 extends the opening 32 to house the wire W.

In addition, each of the engagement elements 3 is provided with a hooking means 7 (figure 3) projecting toward the space 4 and aligned with respect to each other. The hooking means for example comprises a shank fixed to the element and a folding toward the element. Alternatively, said means is a screw with threaded shank 70 partially screwed into the element and a protruding mushroom-like head 71. In this manner, it can be adjusted to better adapt the hooking with respect to the different types of thickness of the wire of the clasping element.

According to a first embodiment of the invention, as shown in the figures 1-8, the second portion 31 of the engagement elements 3 is rigidly fixed to a corresponding actuator element 5. In this embodiment, the actuator element 5 is a pair of arms of a gripper, wherein the arms are articulated to each other by a fulcrum 50 from which there depart, in an entirely conventional manner, corresponding handle-like portions 51 and, in the opposite direction, actuation portions 52 fixed to the engagement elements 3. A conventional elastic element 53 for grippers is interposed between the fulcrum 50 and the handle-like portions 51.

An elastic element 6 is fixed with the two bridge-like ends thereof between said two engagement elements 3. Preferably, it is positioned between the support 2 and the actuator elements 5 and it is a metal spring which is stressed when the engagement elements are rotatably separated.

With reference to figures 4-9, below is the description of the operation of the tool 1.

First and foremost, the hook or clasping element C, as described for example in patent EP1954118, is fitted into the stake R in an entirely conventional manner and that is the saddle-like portion C1 thereof which embraces the stake and the two foldings C2 of ends of the saddle (only one is shown in figure 4) resting on the wire W arranged horizontally in a cross-like fashion on one side of the stake. In this position, the two arms C3 of the hook are directed to the side of the stake opposite with respect to that of the saddle-like portion and with the respective arched ends C4 crossed and superimposed.

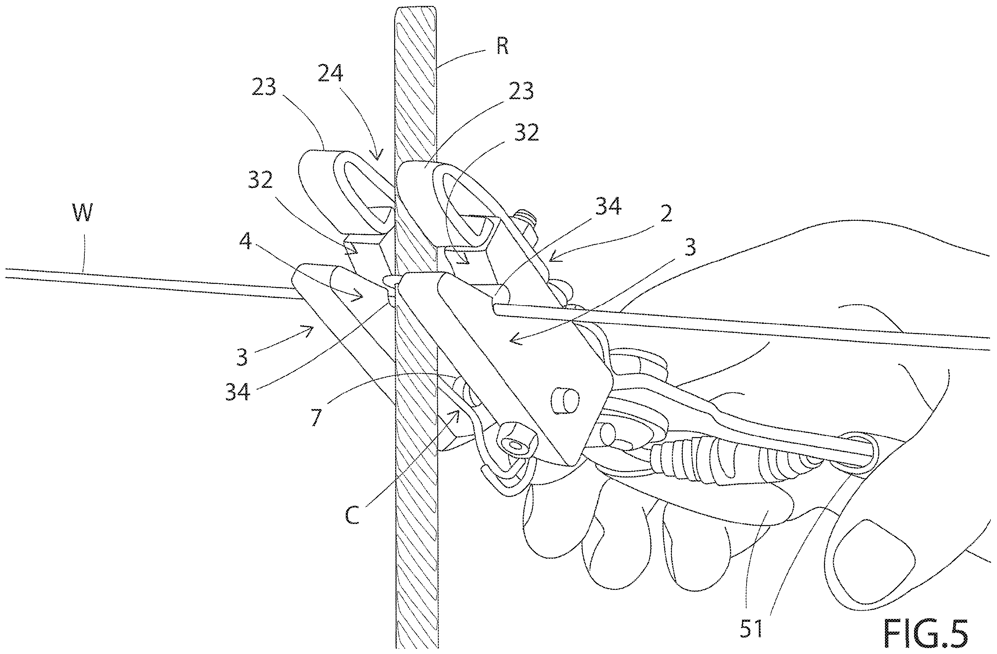

The tool 1 is now approached to the stake from the protrusion side of the arms C3 (figure 5) so that the space 24 of the fork 23 of the support 2 houses the stake. With said automatic centring, the wire W engages the openings 32 until it reaches the recesses 34 of the first end 30 of the engagement elements 3. In this position, the clasping element C is inserted into the space 4 between the engagement elements 3 and, therefore, the arms thereof C3 are each engaged by hooking means 7.

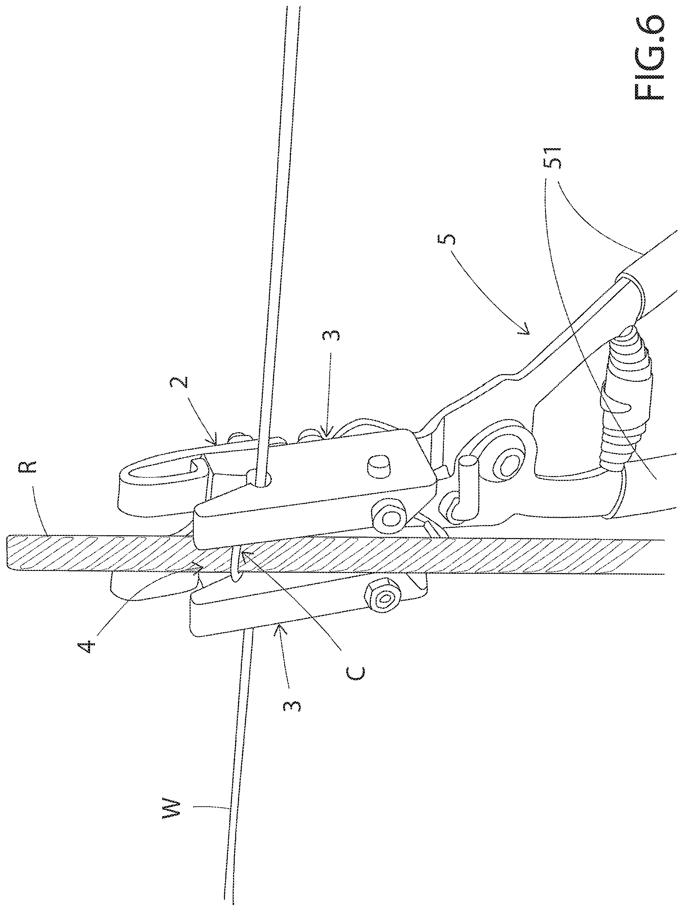

Then, the tool 1 is rotated downward on the wire W approaching the stake R so as to bring also said arms C3 with the respective arched ends C4 close and parallel to the stake R (figure 6).

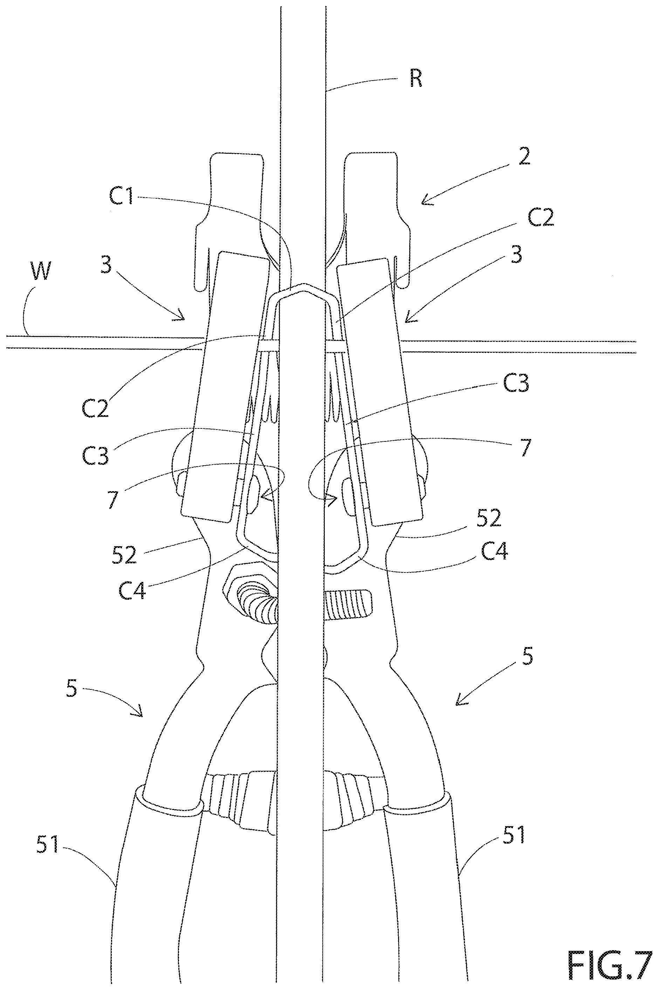

At this point, by tightening the handle-like portions 51 of the actuator element 5 with the hand, the engagement elements 3 are diverged following the rotation of the first end 30 thereof on the pins 20 for connection with the support 2 imparted by the actuation portions 52 (figure 7). As observable, given that the arms C3 of the clasping element 3 are coupled to hooking means 7, the diverging also causes the diverging of these arms.

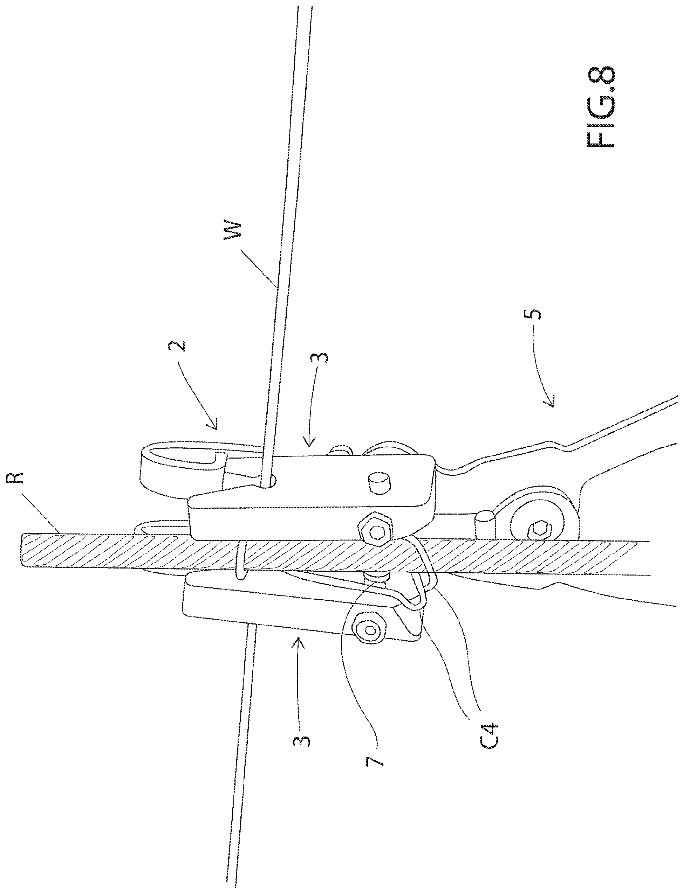

The tool 1 may therefore be further approached to the stake R so that the arched ends C4 of the engagement element 3, diverged as mentioned, surpass the stake. In other words, said ends move to the side of the stake opposite with respect to that of contact of the wire W, as shown in figure 8.

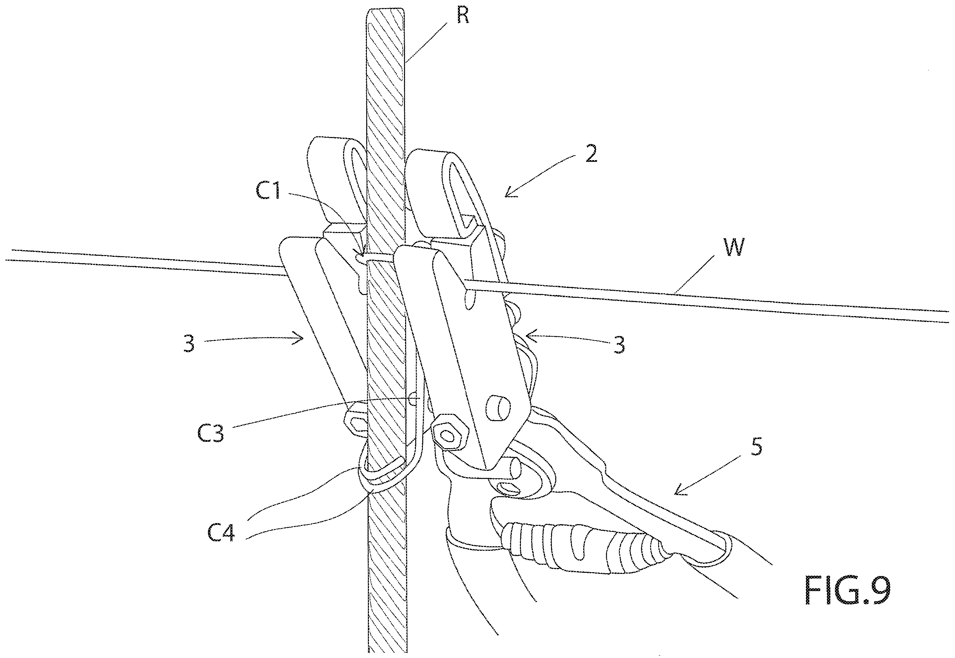

Now, the handle-like portions 51 of the actuator element 5 may be released so that the arms C3 of the clasping element C elastically return parallel and beside the stake R and, simultaneously, the arched ends C4 embrace the stake R on the same side as the saddle-like portion C1 (figure 9).

Hereinafter, the tool 1 may be removed from the engagement with the wire W by removing it from the openings 32 of each engagement element 3.

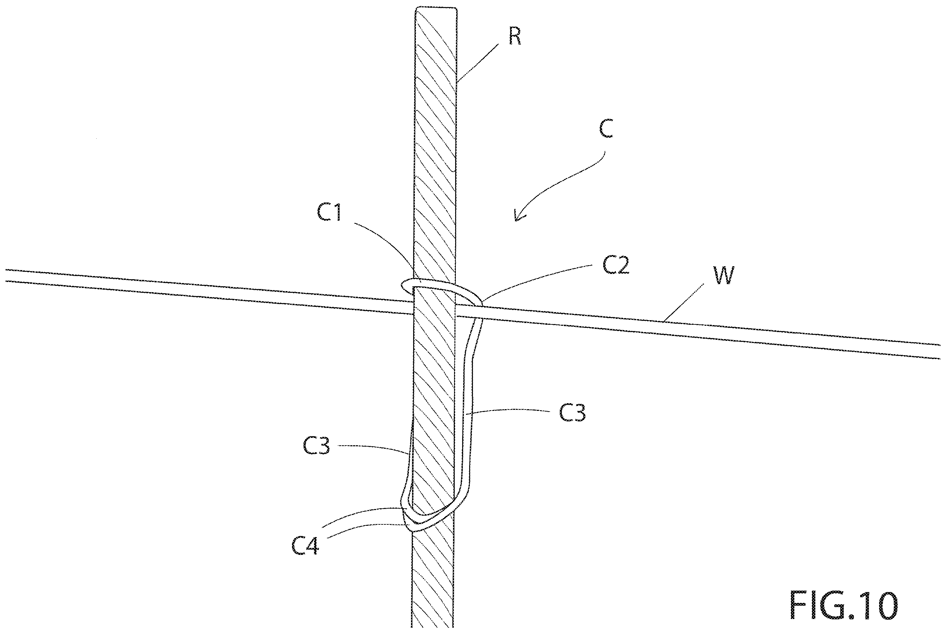

As a result, the clasping element C is correctly mounted vertically on the stake R so as to firmly lock the horizontal wire W thereon (figure 10).

In the light of the above, it is clear that the tool allows - in an automatic, simple and quick manner - the correct and accurate mounting of the hook without intervening manually or with tools that however require a certain dexterity and contact with the hook by the operator.

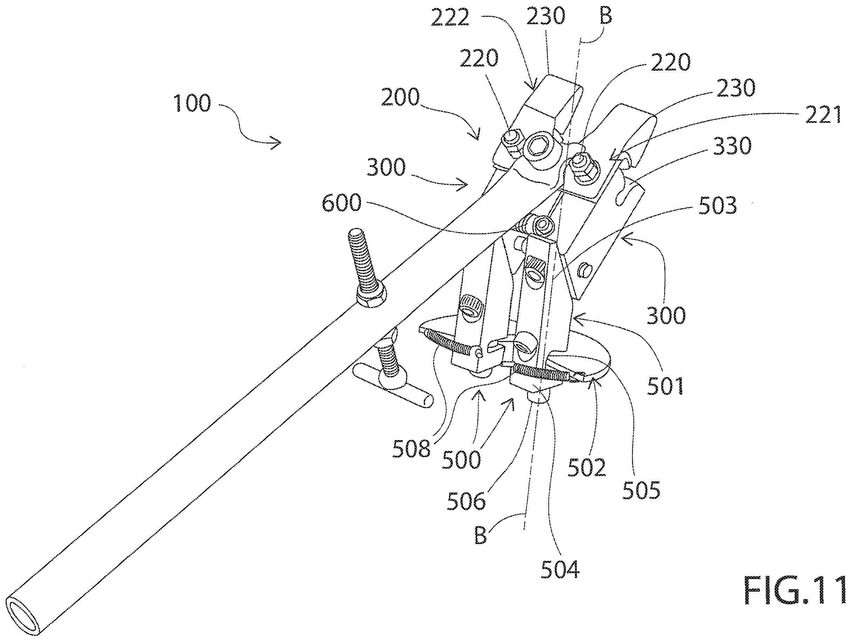

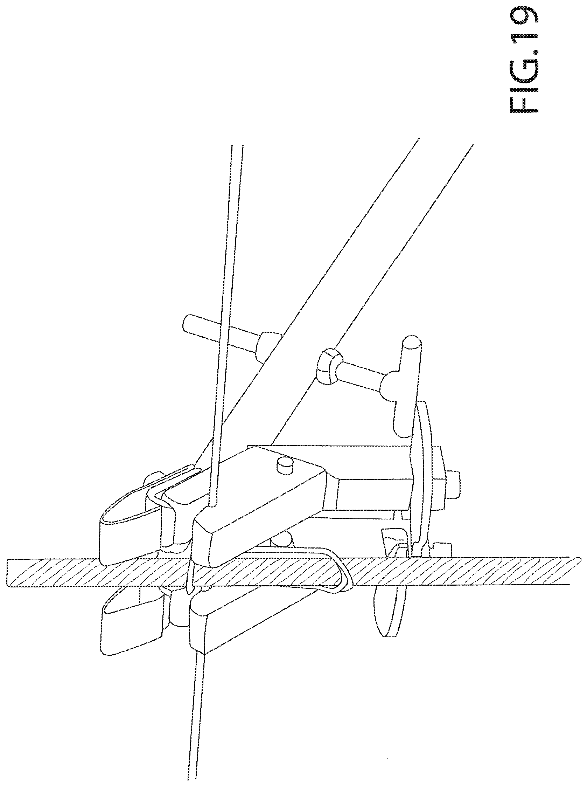

With reference to figures 11-19, herein shown is a variant embodiment of the invention wherein indicated with reference number 100 is a tool for mounting an element for clasping a wire W on a stake for plants.

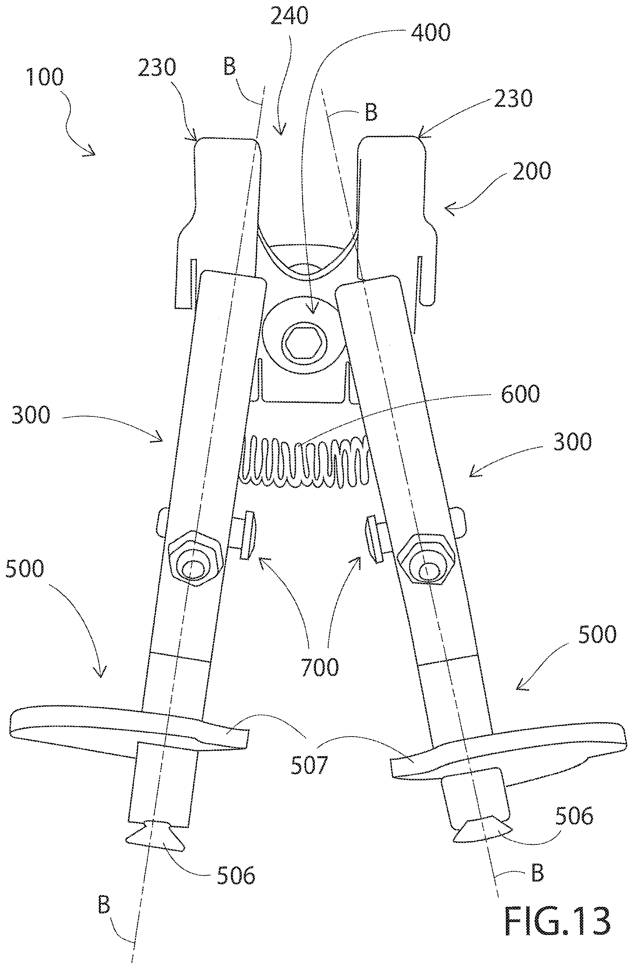

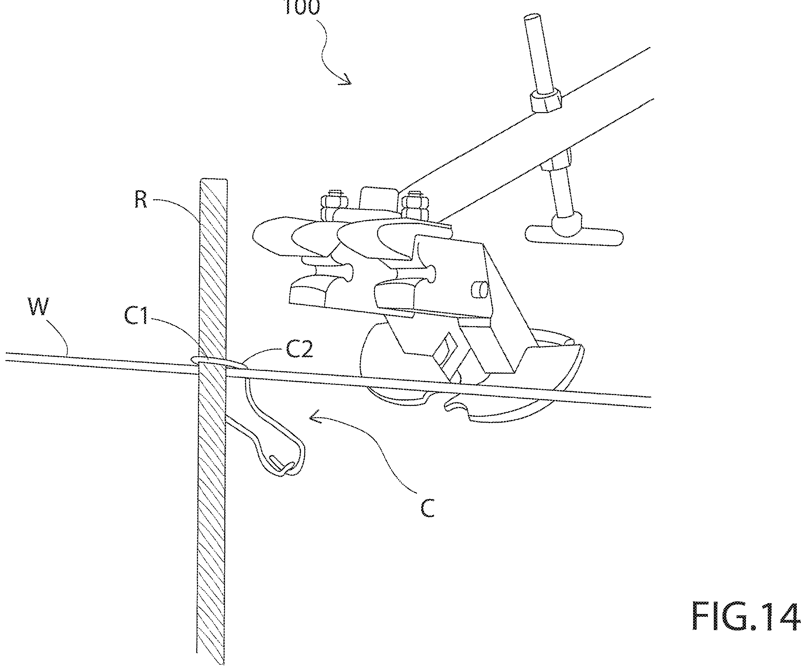

As previously mentioned, even in this case the tool comprises a support 200 for a pair of elements 300 for engagement with said clasping element (shown in figures 14- 19). In particular, the engagement elements 300 are mounted on said support 200 parallel, separated by a space 400 and rotatable on the same plane spacing apart. A pair of actuator elements 500 can then be actuated to rotate said engagement elements 300 spacing them apart. Furthermore, an elastic element 600 is fixed on the engagement elements 300 for the return thereof in inoperative position after they have been spaced apart by said actuator elements 500. In addition, the engagement elements 300 each comprises a hooking means 700 (figure 13) to reversibly retain an arm of said clasping element during the mounting thereof on the stake.

In particular, the support 200 is substantially identical to the aforementioned support 2, hence it will not be described again and the same parts are named in an identical manner in the following description but numbered differently in the figures. In particular, the support comprises a first bridge-like portion 221 with holes for engagement with pins 220, and a second portion 222 with fork 230.

Also the engagement elements 300, the elastic element 600 for the return of said elements to the inoperative conditions and hooking means 700 are substantially identical to those described previously but the different parts are numbered differently.

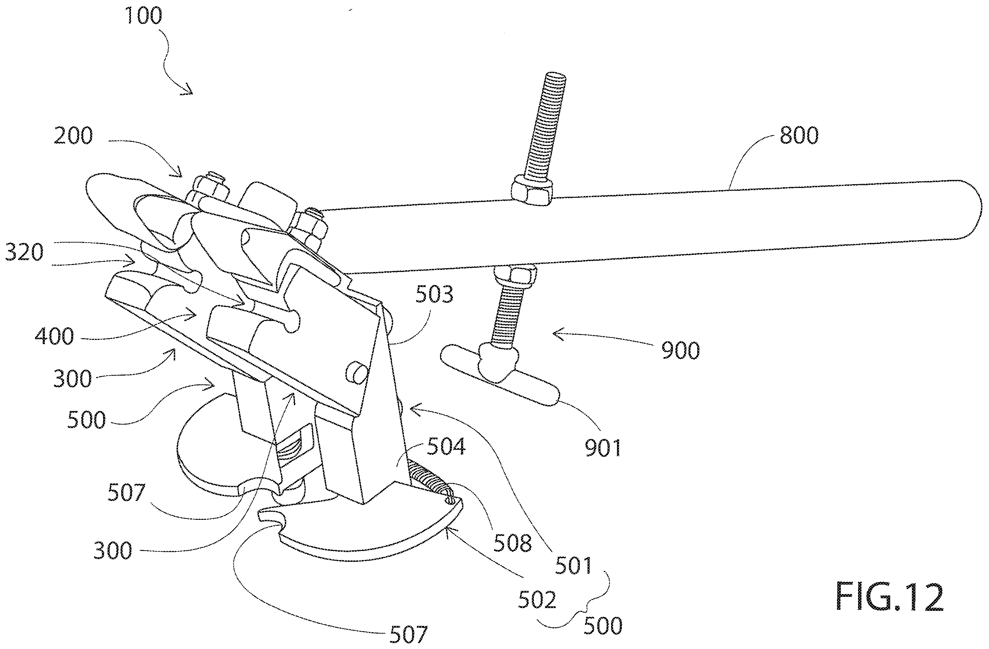

The actuator elements 500 (figures 11 and 12), instead, comprise a first portion 501 fixed to the engagement element 300 and a second movable portion 502. The first portion 501 has a longitudinal axis B-B (figure 13) on which there lies a first end 503 for rigid connection with the engagement element 300 and a second end 504 for connection with the second movable portion 502.

In particular, the second end 504 is provided with a seat 505 for the rotatable housing of the second movable portion 502. This seat for example consists of a groove into which there is partially inserted the second movable portion 502.

In turn, the movable portion 502 is a rotary element with rotation axis coinciding with the longitudinal axis B-B of the first portion 501 (figure 13). Preferably, such movable portion is circular-section-shaped with the origin of angle at the centre passed through by a pin 506 which lies on the axis B-B and connects it with the second end 504 of the first portion 501.

Furthermore, the movable portion 502 comprises a notch 507 (figures 12 and 13), preferably arched, for engagement with a portion of the surface of the stake R, as explained hereinafter. The notch is positioned at a first end of the circular section, while at the opposite end there is constrained a first end of an elastic element 508. The second end of the elastic element is instead constrained to the second end 504 of the fixed portion 501 of the actuator element 500.

It should be observed that under inoperative conditions, that is when the elastic element 508 is not stressed, the notch is positioned toward the space 400 so as to be ready to engage the stake, as explained hereinafter.

In addition, the tool 100 is provided with a control gripping element 800 (figure 12) fixed to the support 200 that the operator grips to actuate the tool. Advantageously, the gripping element is provided with a stop element 900 suitable to abut against the stake R when mounting the clasping element C so as to provide an automatic end-stop calibrated so as to avoid excessive foldings of the clasping element which could cause stresses thereon. In this manner, the operator does not even need to pay attention to how much stroke to make the tool travel to make the arms C3 of the clasping element C overcome the stake R, as better explained below.

Furthermore, the stop element 900 is preferably an adjustable screw with a bar head 901 suitable to abut against said stake. The possibility to be adjusted allows it to adapt to the type of clasping element C, that is to the elastic resistance in order to avoid the aforementioned more or less marked stress or to the folds of the curved ends C2 of the saddle-like portion C1 thereof.

The present tool 100 operates in a manner similar to that described above, but with some further advantages.

As a matter fact, as mentioned above, the clasping element C is fitted onto the stake R so that the saddle-like portion C1 is on the opposite side with respect to that of contact with the wire W. In this position, the wire W is engaged by the two arched ends C2 of the saddle-like portion C1 (figure 14).

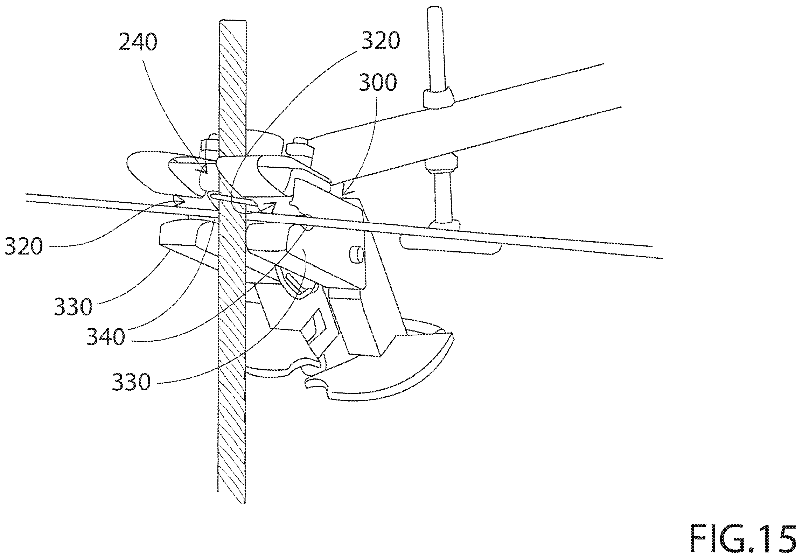

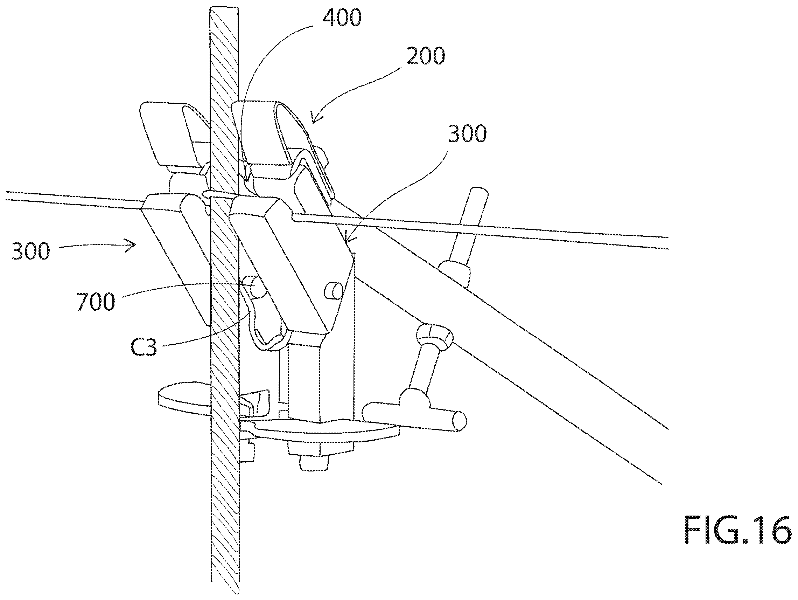

Then, the tool is approached to the stake so that the space 240 of the support fork 230 houses the stake and the wire W engages the openings 320 until it reaches the recesses 340 of the first end 330 of the engagement elements 300 (figure 15). In this position, the clasping element C is inserted into the space 400 between the engagement elements 300 and, therefore, the arms C3 thereof are each engaged by hooking means 700 (figure 16).

Hereinafter, the tool 100 is rotated downwards on the wire W approaching the stake R so as to also carry also said arms C3 with the respective arched ends C4 close and parallel to the stake R. Simultaneously, the notches 507 of the second portions 502 of the actuator elements 500 engage the stake R.

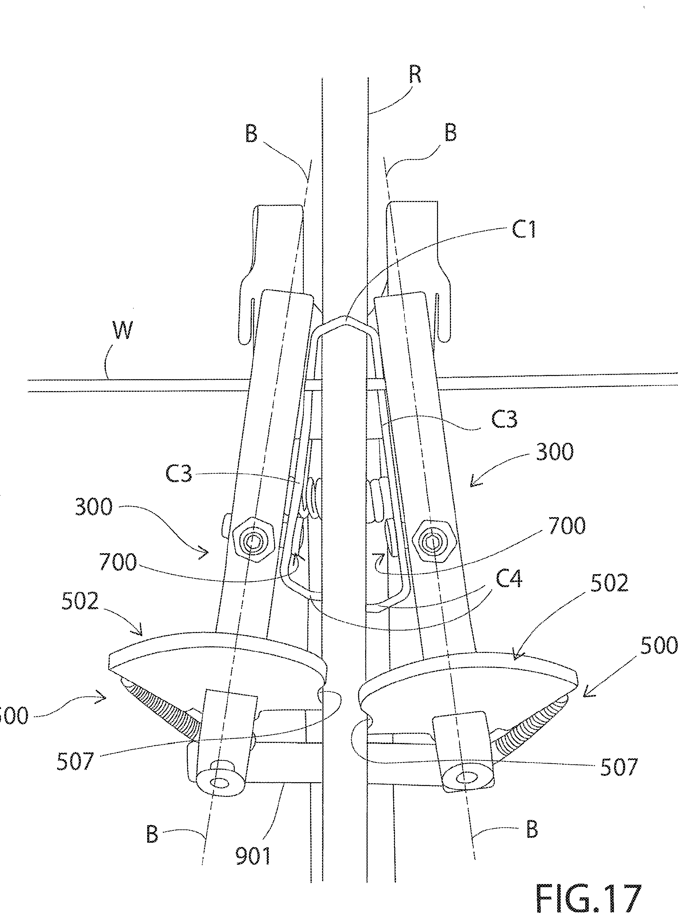

Continuing to rotate the wire W approaching further to the stake R, the second portions 502 start to rotate on axis B-B thereof therefore also causing the rotation of the engagement elements 300 (figure 17). The engagement elements 300 in turn diverge the arms C3 and the respective arched ends C4 of the clasping element C due to the engagement with the hooking means 700. Thus diverged, the arched ends C4 may surpass the stake and move to the same resting side as the saddle-like portion C1.

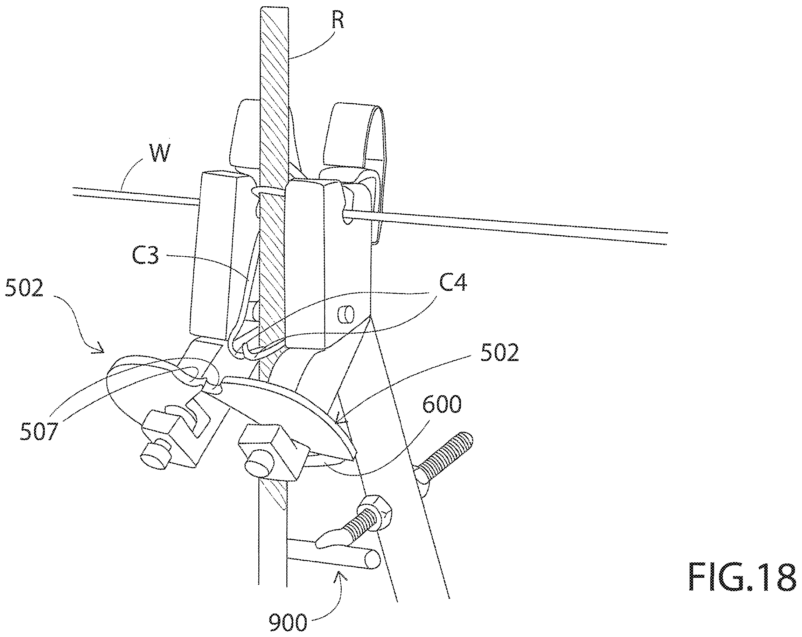

By rotating the tool once again, the second portions 502 rotate further surmounting the stake and moving to a position such to release the notches 507 from the stake R (figure 18). Given that there is no constraint with the stake R, the second portions are free to return to the inoperative position thanks to the return of the elastic element 600 and, simultaneously, the arms C3 are approached once again and the arched ends C4 are locked on the stake R (figure 18).

It should be observed that the tool advantageously stops at the exact time when the arched ends C4 have space sufficient to surmount the stake and be coupled on the opposite side thereof. This automatic operation is ensured by the stop element 900 that only at this time abuts against the stake R on the support side of the wire W.

Now, the tool 100 may be released from the engagement with the wire W and the clasping element C is firmly mounted to lock the wire W on the stake T in an entirely conventional manner, like in figure 10.

It is clear that besides the aforementioned advantages of practicability and ease of mounting, with the aforementioned variant, manual operations are even reduced further given that it is not necessary to operate manually on the gripping elements of an element similar to a gripper, but it is sufficient to push the device using the hand. As a matter fact, the action of diverging the arms of the clasping element occurs entirely automatically thanks to the second rotary portions 502 of the actuator elements 500.

In addition, the stop element provided by the element 900 allows to perfectly calibrate the correct time to release the arched ends C4 of the clasping element C on the stake, avoiding useless and harmful yield stresses.

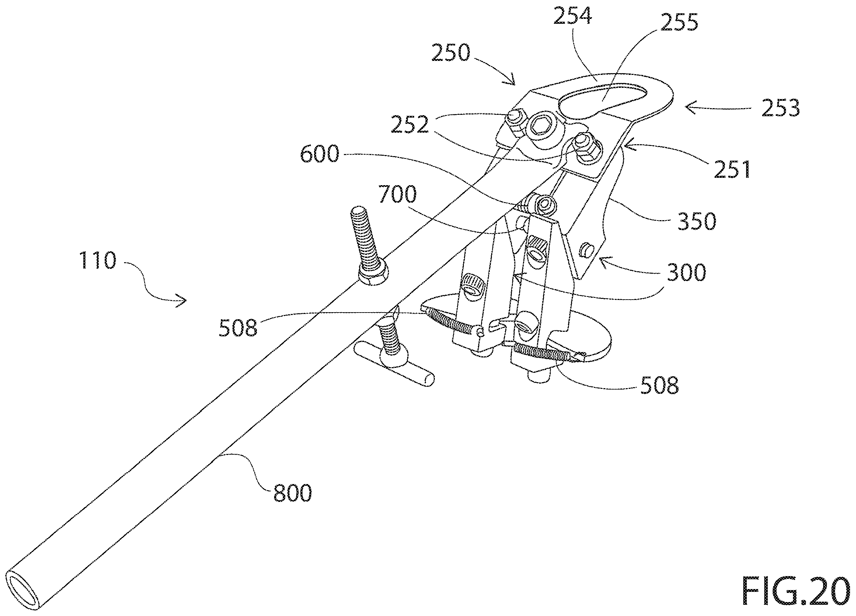

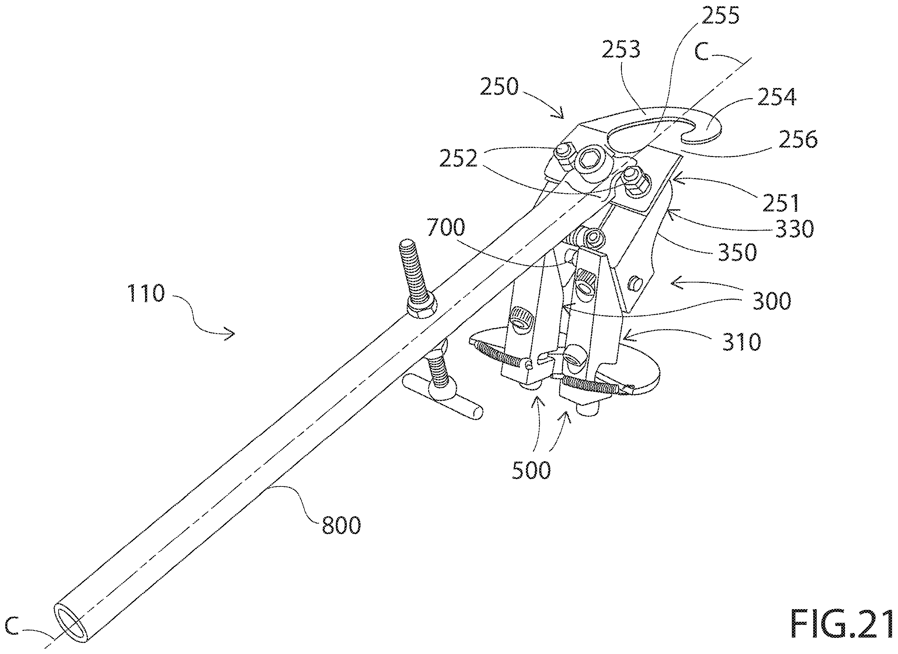

With reference to figures 20 and 21, there are shown two variants of the tool 100 of figure 11. The tool 110 is generally similar to that described above; therefore, all the parts thereof will not be described in detail, although the parts identical in the drawings are indicated using the same reference numerals.

The present variants differ from the tool 100 in that the support 250 is a plate with a first bridge-like portion 251 between the engagement elements 300 and provided with holes (not indicated) for engagement with the pins 252 for connecting with said engagement elements. A second portion 253 is provided with a closed (figure 20) or open (figure 21) ring 254 instead of the aforementioned fork 230. The space 255 defined by the open or closed ring allows to fit the tool on the stake R and centre the engagement movement with the clasping element C thereon, instead of centring the fork 230 and the respective openings 320 on the load-bearing wire W.

In the case of the open ring, the interruption 256 is staggered with respect to the longitudinal axis C-C of the handle 800 for displacing the tool (figure 21).

As a matter fact, the ring 254 allows to avoid the processing of the first end 330 of each engagement element 300 so as to obtain the opening 320 for engagement with the load-bearing wire W. Therefore, the element 300 may be constructively simplified and have a simple discharge 350 or inclined plane for resting on the load-bearing wire W.

The use of such variant allows to avoid the centring of the tool on the load-bearing wire W given that it is sufficient either to fit the stake R on the upper end, when the ring 254 is closed, or laterally thereto, when the ring 254 is open. Subsequently, the engagement elements 350 are approached to the stake R so as to house the clasping element C in the space 400 thereof. The subsequent movements are identical to those already described above.

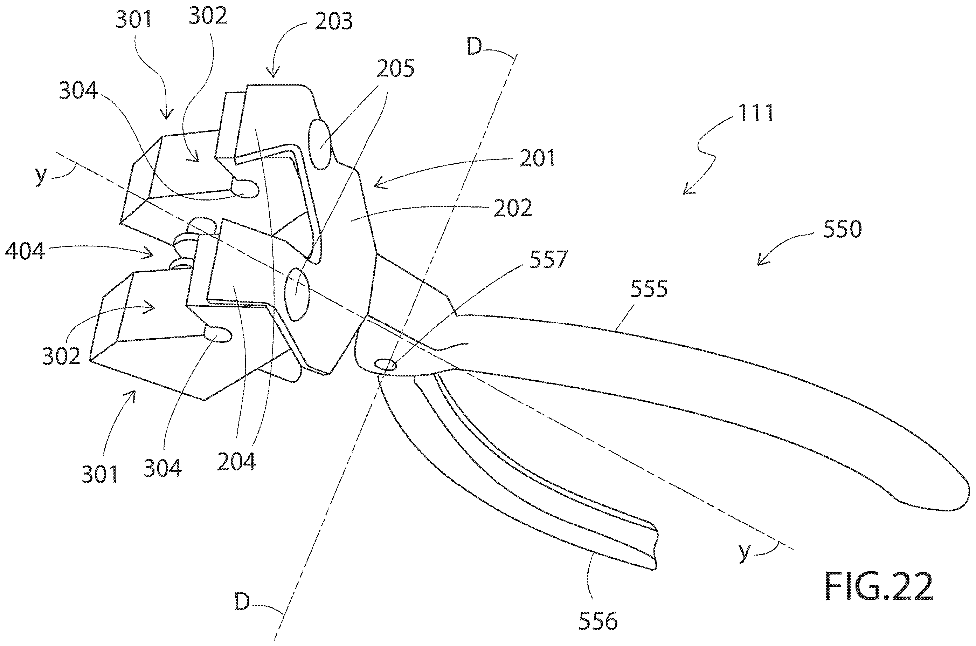

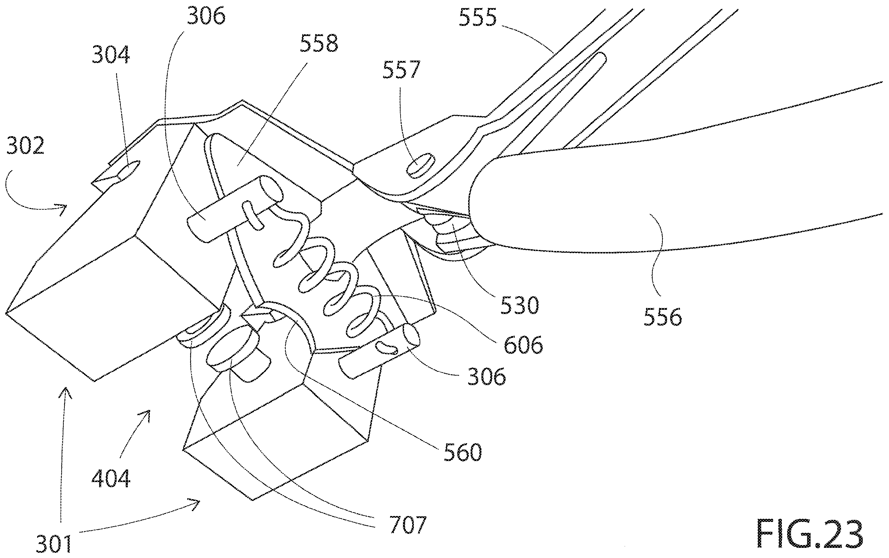

With reference to figures 22 and 23, there is shown a further embodiment in which the tool 111 comprises a support 201 for a pair of elements 301 for engagement with said clasping element. The engagement elements 301 are mounted on said support 201 separated by a space 404 and rotatable on the same plane spacing apart. A pair of actuator elements 550 can then be actuated to rotate said engagement elements 301 spacing them apart. Furthermore, an elastic element 606 is fixed on the engagement elements 301 for the return thereof in inoperative position after they have been spaced apart by said actuator elements 550. In addition, the engagement elements 301 each comprise a hooking means 707 (figure 23) to elastically deform said clasping element during the spacing apart of said engagement elements and, preferably, to reversibly retain an arm of said clasping element during the mounting thereof on the stake.

In particular, the support 201 is substantially identical to the support described with reference to the tool 1 of figure 1, and that is with a first bridge-like portion 202 between the two engagement elements 301 and a second portion 203 with a fork 204. Furthermore, the first portion 202 is perforated and engaged by pins 205 for fixing with the engagement elements 301. The engagement elements are then separated from the aforementioned space 404. The shape of said elements is substantially identical to that described with reference to the elements 3 of the tool 1 of figure 1.

It should be observed that the first portion 202 of the support 201 is made as single piece with a first arm 555 of said pair of actuator elements 550, the second arm 556 being articulated to the first one through a pin 557 having a rotation axis D-D generally orthogonal to the extension axis Y-Y of the space 404 between the engagement elements 301. Furthermore, the first 555 and second 556 arms advantageously move mutually around said pin 557 on a generally orthogonal plane with respect to the movement plane of the engagement elements 301. Therefore, the position of the wrist of the operator when mounting the clasping element C is substantially aligned with the forearm, while with the tool 1 of figure 1 the wrist of the operator is not aligned with the forearm and this could at least lead to fatigue over time.

In addition, as shown in figure 23, the second arm 556 of the actuator elements 550 terminates with a thrust portion 558 configured to act on corresponding pins 306 projecting from said engagement elements 301 on the opposite side with respect to that of the opening 302 for housing the load-bearing wire W. Preferably, the thrust portion 558 is generally triangular-shaped with a vertex 559 facing toward said pins 306 and preferably provided with an end-stop notch 560 for engagement abutting against the stake R.

The elastic element 606 for the return of the engagement elements 301 to the inoperative position is mounted between the aforementioned two pins 306 of the engagement elements. Furthermore, a further elastic element 530 is mounted between two arms 555 and 556 of the actuator element 550.

The use of the tool 111 described above is substantially identical to that described for the tool 1 of figure 1, differing in the fact that the spacing apart of said engagement elements 301 to diverge the arms C3 of the clasping element C occurs, as mentioned above, with an approaching of the two arms 555 and 556 of the actuator 550 so that the thrust portion 558 abuts against the two pins 306 of each of the engagement elements 301 spacing them apart.

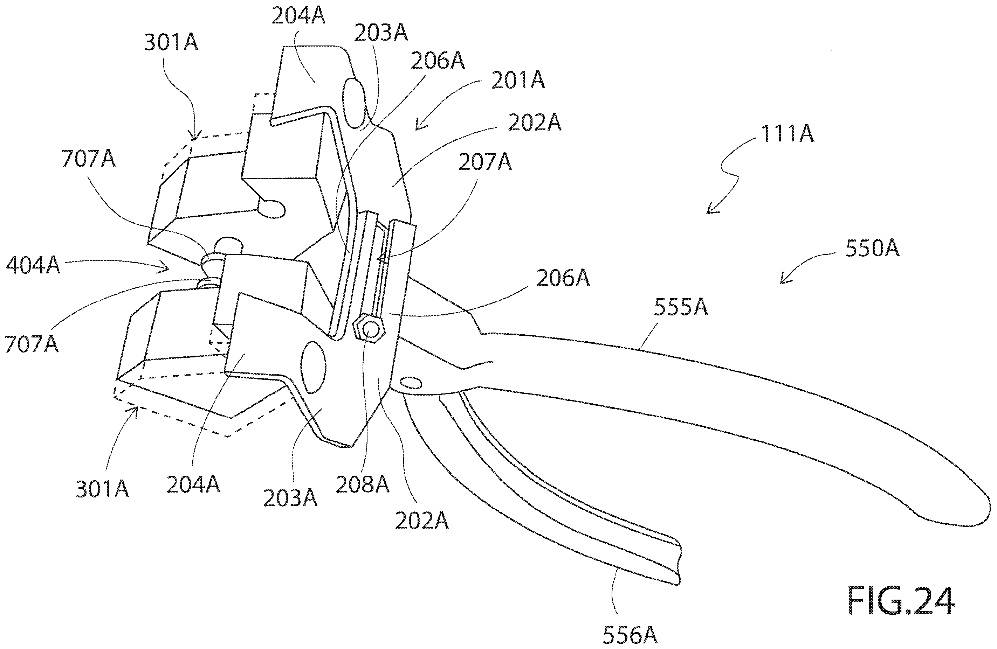

Shown with reference to figure 24 is a variant of the tool 111 of figures 22 and 23. This variant is generally indicated with number 111A and it comprises, like the tool 111, a support 201A for a pair of elements 301A for engagement with said clasping element. The engagement elements 301A are mounted on said support 201A separated by a space 404A and rotatable on the same plane spacing apart. A pair of actuator elements 550A can then be actuated to rotate said engagement elements 301A spacing them apart. Furthermore, an elastic element 606A (not shown) is fixed on the engagement elements 301A for the return thereof to the inoperative position after they have been spaced apart by said actuator elements 550A. In addition, the engagement elements 301A each comprise a hooking means 707A to elastically deform said clasping element.

The engagement elements 301A, the actuator elements 550A, the elastic element 606A and the hooking means 707A are identical to those described above.

The support 201A has a shape generally identical to that of the corresponding support 201 differing in the fact that the first bridge-like portion 202A consists of two superimposed plates 206A provided with a groove 207A engaged by an adjustable stop element 208A. Furthermore, each plate is continuous with a corresponding branch of the fork 204A of the second portion 203A of the support 201A.

Furthermore, the first arm 555A of the actuator elements 550A is made as single piece with the plate 206A closest to the engagement elements 301A.

The groove 207A of each plate 206A and the adjustable stop element 208A, allows to adjust the distance between the branches of the fork 204A which, being connected with the respective engagement elements 301A, also allow to adjust the distance between the engagement elements and, therefore, the space 404A thereof for housing the clasping element C (not shown). Therefore, the tool 111A is advantageous given that it can be easily adapted to the various sizes of the clasping elements available on the market.

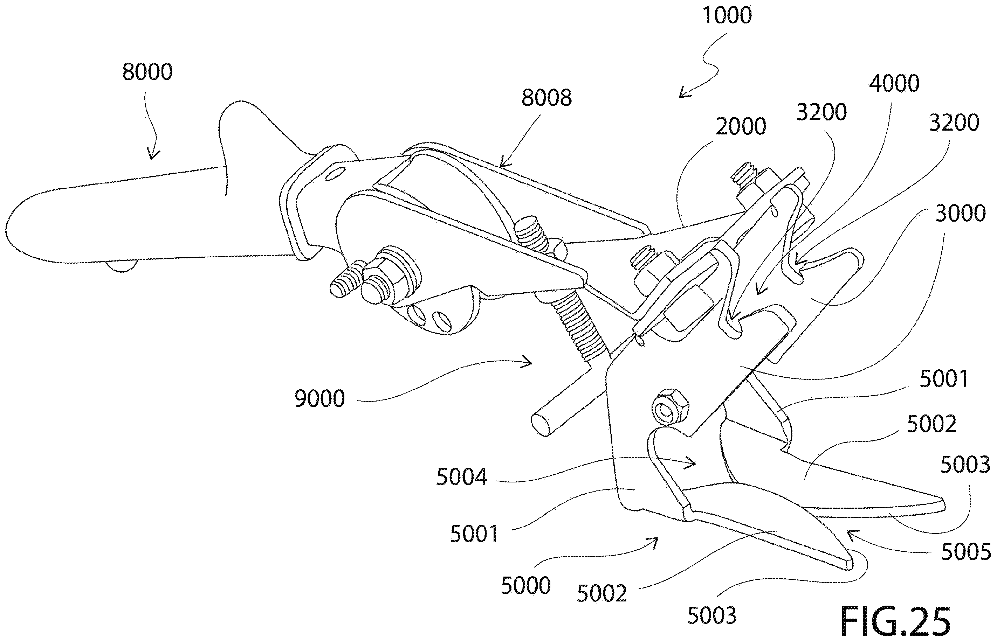

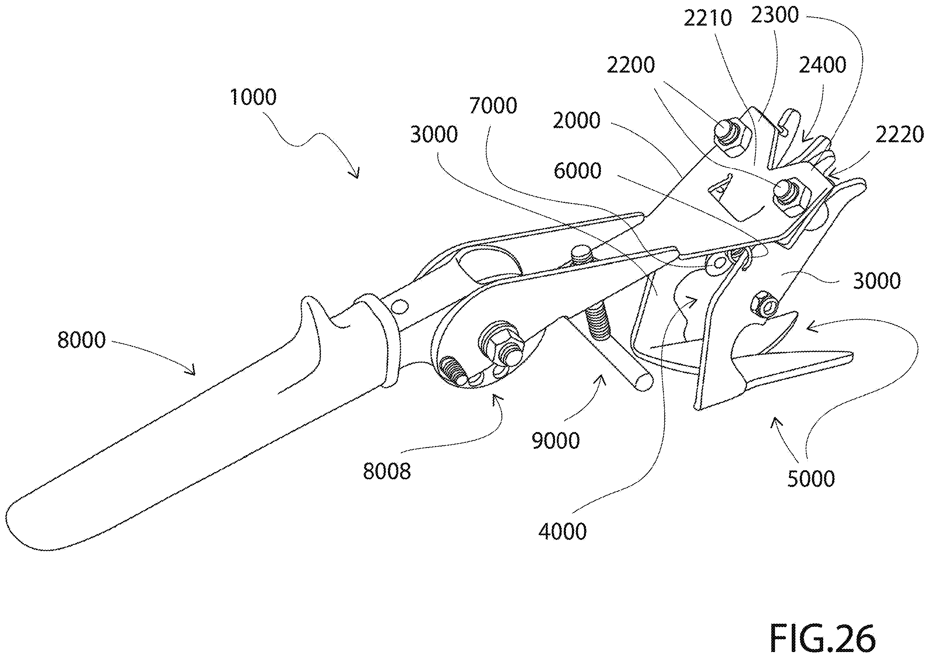

Shown with reference to figures 25- 26 is a variant of the tool 100 of figures 11-13. The tool 1000 comprises a support 2000 for a pair of elements 3000 for engagement with said clasping element C. In particular, the engagement elements 3000 are mounted on said support 2000 parallel, separated by a space 4000 and rotatable on the same plane spacing apart. A pair of actuator elements 5000 can then be actuated to rotate said engagement elements 3000 spacing them apart. Furthermore, an elastic element 6000 is fixed on the engagement elements 3000 for the return thereof in inoperative position after they have been spaced apart by said actuator elements 5000. In addition, the engagement elements 3000 each comprise a hooking means 7000 (figure 26) to elastically deform said clasping element during the spacing apart of said engagement elements and, preferably, to reversibly retain an arm of said clasping element during the mounting thereof on the stake.

In particular, the support 2000 is substantially identical to the aforementioned support 200, hence it will not be described again and the same parts are named in an identical manner in the following description but numbered differently in the figures.

In particular, the support comprises a first bridge-like portion 2210 with holes for engagement with pins 2200, and a second portion 2220 with fork 2300 (figure 26).

Also the engagement elements 3000, the elastic element 6000 for the return of said elements to the inoperative conditions and hooking means 7000 are substantially identical to those described previously but the different parts are numbered differently.

The actuator elements 5000 (figure 25), instead are made as a single piece with the engagement elements 3000. In particular, the actuator elements each have a first portion 5001 which extends from said engagement elements on the same plane and a second portion 5002 which extends from said first portion on a plane generally orthogonal to the plane of the first portions so as to face each other. The second portions 5002 are advantageously segment-shaped with a rounded edge 5003 facing toward the space between the two first parallel portions 5001. It should be observed that the two rounded edges are approached or superimposed so as to form a pilot element for engagement with the stake R, as explained hereinafter. Basically, there are formed two pilot elements, a first pilot element 5004 facing toward a control gripping element 8000 and a second pilot element 5005 facing the opposite direction with respect to the first pilot element (figure 25).

The control gripping element 8000 is fixed to the support 2000 through a joint 8008 which allows the operator to adjust the inclination of the engagement elements 3000 and of the actuator elements 5000 with respect to the gripping element depending on the particular needs or preferences. Furthermore, the gripping element is provided with an adjustable stop element 9000 suitable to abut against the stake R, identical to that described above.

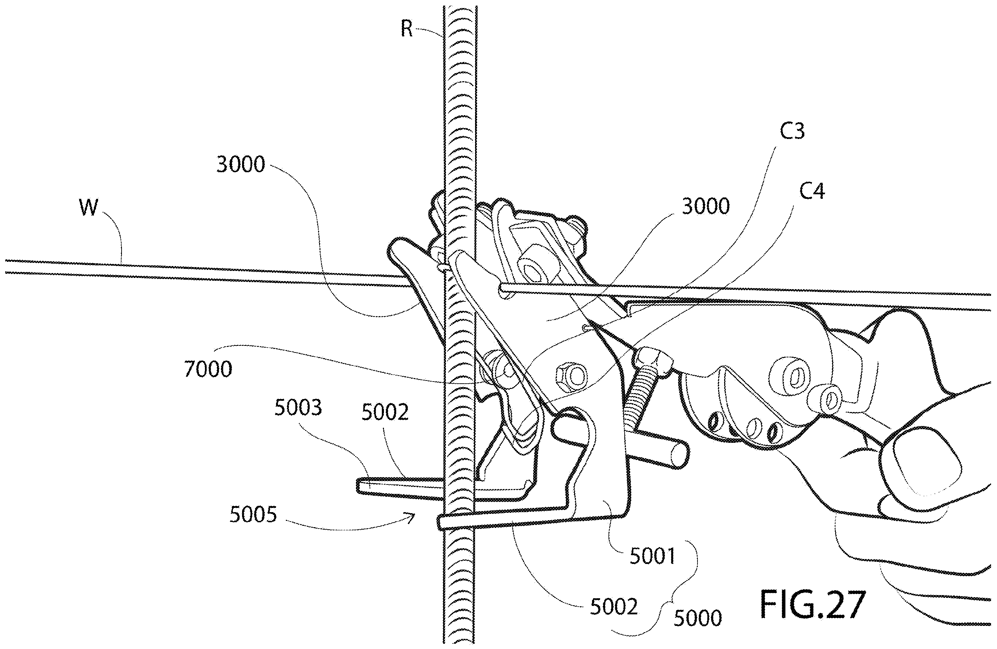

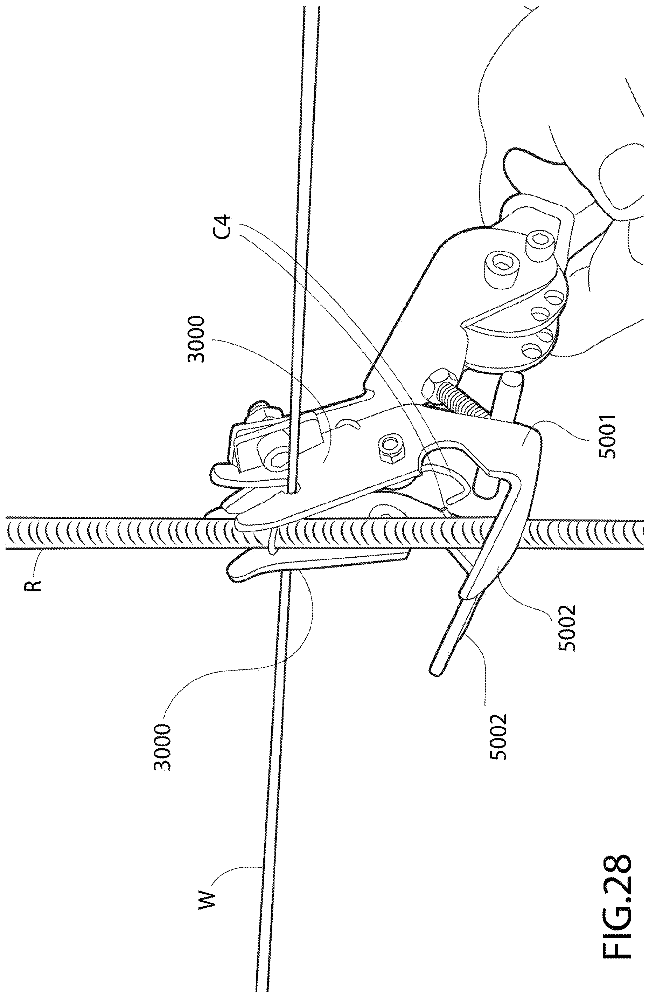

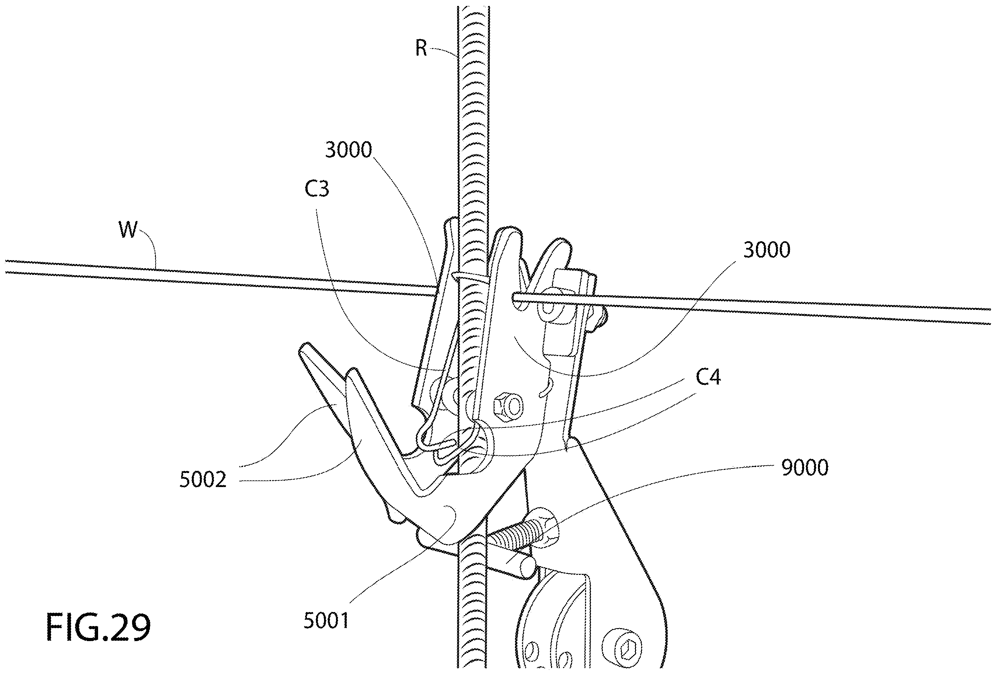

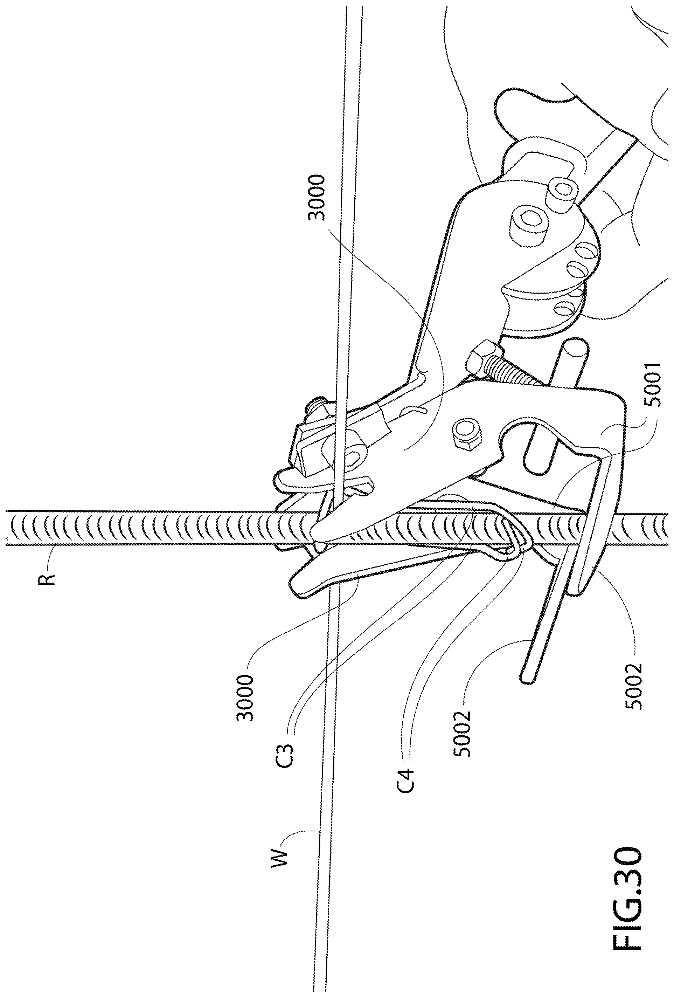

The operation of the tool 1000 is generally similar to that described with reference to figures 14-19, but with a further advantage. As a matter fact, being made as a single piece with the engagement elements 3000 in this case the actuator elements 5000 are without rotatable portions, elastic return elements and rotation pins that complicate the structure thereof. Thanks to the arched shape of the edges 5003 and the mutual position thereof to form the aforementioned second pilot element 5005, the support on the stake R is even easier (figure 27). Then, the thrust of the tool against the stake causes the diverging of the two edges 5003 which, being made as a single piece with the actuator elements 3000, in turn open the actuator elements as described above, that is also so as to open the arms C3 with the relative arched ends C4 of the clasping element C thanks to the engagement with the hooking means 7000 (figure 27). Thus diverged, the arched ends C4 (figure 28) may surpass the stake and move to the same resting side as the saddle-like portion C1. Still pushing the tool toward the stake, both the first 5001 and the second 5002 portions of the actuator elements 5000 surpass the stake R moving to a position such to release the edges 5003 from contact with the stake (figure 29) and, therefore, being able to elastically return approaching each other thanks to the elastic element 6000. Simultaneously, the arms C3 of the clasping element C are released from the hooking means 7000 and elastically approach each other again allowing the arched ends C4 to embrace the stake in the clasping position (figure 30).

The tool 1000 may now be released by pulling it in the opposite direction so that the first pilot element 5004 of the edge 5003 of the actuator elements 5000 facilitates a new diverging thereof in order to overcome the stake R and therefore easily allow the releasing of the tool 1000 also from the engagement with the wire W (figure 30).

A further object of the present invention is then to provide a method for the cross-like reversible clasping of a horizontal metal wire W on a stake or rod R using the tool of the present invention.

The method comprises the following steps:
- providing a clasping element C as described above;
- inserting the saddle-like portion C1 thereof on the stake R driven vertically into the ground until the arched ends C2 of said saddle-like portion engage the wire W stretched vertically in contact with the stake;
- pushing the arched ends C4 of said element C making them surmount the stake to pass from the side where the wire W rests on the stake on the opposite side by means of the tool according to any of the embodiments described above.

In other words, the method provides for the use of the tool according to the present invention to mount an element for clasping a horizontal wire on a stake for plants vertically fixed into the ground.

A further object of the invention consists in a method for constructing a grid for supporting rows of plants comprising the steps of:
- driving a plurality of stakes R of a row (not shown) vertically into a ground;
- laying at least one metal wire W horizontally along said plurality of stakes;
- reversibly clasping said at least one metal wire W on said plurality of stakes R by means of a clasping element as described above mounted with a tool according to any one of the aforementioned embodiments.

Preferably, the method comprises further steps for constructing the grid like those described in the introduction of the present description, that is for example driving - into the ground - head posts to which ends of said metal wires are fixed, laying a plurality of movable wires to support the growing vegetable part of the plant, applying devices for the elastic compensation of the movable wires and other per se known steps.

In the light of the above, it is clear that the drawbacks related to the methods for clasping wires on stakes according to the prior art have been overcome while significant advantages have been achieved at the same time.

As a matter fact, the tool allows not to operate manually on the clasping element therefore avoiding fatigue for the operator.

Furthermore, fine dexterity is no longer required during the mounting specifically given that the operations are basically automated.

Even the serious drawback relating to the danger of stressing the clasping element with uncontrolled and improperly calibrated operations is resolved.

Numerous variants to the tool according to the present invention can be adopted by the person skilled in the art, but without departing from the scope of protection of the attached claims.

For example, the shapes of each component shown in the figures may vary depending on the particular needs or preferences without affecting the functionality thereof as described above.

The open or closed ring of the variants of figure 21 and 22 may be provided for also in the embodiments of figure 1 and 22, with or without the corresponding modification of the engagement elements provided with an opening to house the load-bearing wire W.

In addition, the engagement elements 300 of the tool 100 and 110 may also be made as a single piece with the actuator elements 500 so as to have only the second portion 502 distinct and movable. In other words, the first end 503 of the first portion 501 is made as a single piece with the engagement element 300.

Still, the support 201A of the tool 111A may replace the support 200 of the tool 100 of figure 11.

## Claims

1. Tool (1;100;110;111;111A;1000) for mounting a clasping element (C) for the reversible clasping of a horizontal wire (W) on a stake (R) for plants vertically driven into the ground, comprising a support (2;200;250;201;201A;2000) for a pair of engagement elements (3;300;301;301A;3000) of said clasping element (C) mounted separate on said support (2;200;250;201;201A;2000) so as to define a space (4;400;404;404A;4000) between them so that they are suitable to be moved apart on the same plane, actuator elements (5;500;550;550A;5000) which can be actuated to move apart said engagement elements from each other, an elastic element (6;600;606;6000) for returning said engagement elements to the inoperative position after they have been moved apart from each other through said actuator elements, said engagement elements (3;300;301;301A;3000) each comprising a reversible hooking means (7;700;707;707A;7000) directed in the space (4) defined by said engagement elements (3) and configured to elastically deform said clasping element when moving apart said engagement elements (3;300;301;301A;3000).

2. Tool (1;100;110;111;111A;1000) according to claim 1, wherein said support (2;200;250;201;201A;2000) rotatably connects and supports the pair of engagement elements (3;300;301;301A;3000) by means of pins (20;220;252;205;2200), one on each of the engagement elements so that the elements are spaced from each other by said space (4;400;404;404A;4000) for housing the clasping element (C).

3. Tool (1;100;111;111A;1000) according to claim 2, wherein the support (2;200;201;201A;2000) is a plate with a first portion (21;210;202;202A;2210) arranged astride between said engagement elements (3;300;301;301A;3000) and provided with holes for said pins (20;220;205;2200), and a second portion (22;222;203;203A) provided with a fork (23;230;204;204A;2300) which delimits a space (24;240;404;404A;2400) for centring the stake (R).

4. Tool (1;100;110;1000)) according to any one of claims 1 to 3, wherein each engagement element (3;300;3000) is an arm provided with a first end (30;330) fixed to the support (2;200;2000) with a pin (20;220;2200) and a second end (31;310) fixed to an actuator element (5;500;5000).

5. Tool (1;100;1000) according to claim 4, wherein said first end (30;330) is provided with an opening (32;320;3200) for housing said wire (W), the opening having a first section (33) for piloting the insertion of the wire terminating in a semi-cylindrical-shaped recess (34;340).

6. Tool (1) according to any one of claims 1 to 5, wherein said actuator element (5) is a pair of arms of a gripper, wherein the arms are articulated to each other by a fulcrum (50) from which corresponding handle-like portions (51) depart and, in the opposite direction, actuation portions (52) fixed to the engagement elements (3), an elastic element (53) being interposed between the fulcrum and the handle-like portions.

7. Tool (100) according to any one of claims 1 to 5, wherein said actuator elements (500) comprise a first portion (501) fixed to the engagement element (300) and a second movable portion (502), the first portion (501) has a first end (503) for the rigid connection with the engagement element (300) and a second end (504) provided with a seat (505) for rotatably housing the second movable portion (502).

8. Tool (100) according to claim 7, wherein said movable portion (502) has a circular-section shape with the origin of the angle at the centre passed through by a pin (506) which connects it with the second end (504) of the first portion (501), the movable portion (502) further comprises a notch (507) for engagement with a portion of the surface of the stake (R) obtained at an end of the circular section while a first end of an elastic element (508) is constrained to the second end of the section, the second end of the elastic element being constrained to the second end (504) of the fixed portion (501) of the actuator element.

9. Tool (100) according to any one of claims 1, 7 or 8, further comprising a control gripping element (800) provided with an adjustable stop element (900) suitable to abut against the stake (R).

10. Tool (1000) according to any one of claims 1 to 5, wherein said actuator elements (5000) each have a first portion (5001) which extends as a single piece from said engagement elements (3000) on the same plane and a second portion (5002) which extends from said first portion on a plane generally orthogonal to the plane of the first portions so as to face each other, the second portions (5002) being generally segment-shaped with a rounded edge (5003) facing toward the space between the two first parallel portions.

11. Tool (1000) according to claim 10, wherein said rounded edges (5003) are approached or superimposed to form a first pilot element (5004) facing toward a control handle (8000) and a second pilot element (5005) facing the opposite direction with respect to the first pilot element.

12. Tool (110) according to any one of claims 1, 2 or 4, wherein said support (250) is a plate with a first portion (251) arranged astride between the engagement elements (300) provided with holes for engagement with pins (252) for connecting said engagement elements, and a second portion (253) is provided with a ring (254).

13. Tool (111) according to claim 3, wherein said first portion (202) of the support (201) is made as single piece with a first arm (555) of said pair of actuator elements (550), a second arm (556) being articulated to the former by means of a pin (557) having a rotation axis (D-D) generally orthogonal to the axis (Y-Y) for extending the space (404) between the engagement elements (301), the second arm (556) further terminates with a thrust portion (558) configured to act on corresponding pins (306) projecting from said engagement elements (301) on the opposite side with respect to that of the opening (302) for housing the load-bearing wire (W).

14. Tool (111A) according to claim 3, wherein said first portion (202A) of the support (201A) consists of two superimposed plates (206A) provided with a groove (207A) engaged by an adjustable stop element (208A), each plate being continuous with a corresponding branch of the fork (204A) of the second portion (203A) of the support (201A).

15. Method for mounting an element (C) for clasping a horizontal wire (W) on a stake (R) for plants, comprising the steps of:
- providing a clasping element (C) comprising a saddle-like portion (C1), two arched ends (C2) of said saddle-like portion, two longitudinal arms (C3) which extend parallel from said arched ends and two arched ends (C4) of said arms which cross each other;
- inserting said saddle-like portion (C1) on the stake (R) driven vertically into the ground until the arched ends (C2) of said saddle-like portion engage the wire (W) stretched vertically in contact with the stake (R);
- pushing the arms (C3) and the arched ends (C4) thereof of said element making them surmount the stake to pass from the side where the wire rests on the stake to the opposite side by means of the tool (1;100;110;111;1000) according to any one of claims 1 to 14.

16. Method for constructing a grid for supporting rows of plants comprising the steps of:
- driving a plurality of stakes (R) of rows of plants vertically into a ground;
- laying at least one metal wire (W) horizontally along said plurality of stakes;
- reversibly clasping said at least one metal wire (W) on said plurality of stakes (R) by means of a clasping element (C), mounted with a tool (1;100;110;111) according to any one of claims 1 to 14, said clasping element comprising a saddle-like portion (C1), two arched ends (C2) of said saddle-like portion, two longitudinal arms (C3) which extend parallel from said arched ends and two arched ends (C4) of said arms which cross each other.

## Patentansprüche

1. Werkzeug (1;100;110;111;111A;1000) zum Anbringen eines Klammerelements (C) zum lösbaren Klammern eines horizontalen Drahtes (W) an einem Pfahl (R) für Pflanzen, der senkrecht in den Boden getrieben wird, mit
einem Träger (2;200;250;201;201A;2000) für zwei als Paar vorgesehene Eingriffselemente (3;300;301;301A;3000) des Klammerelements (C), die getrennt an dem Träger (2;200;250;201;201A;2000) so angebracht sind, dass sie einen Raum (4;400;404;404A;4000) zwischen sich bilden, so dass sie in derselben Ebene auseinanderbewegbar sind,
Betätigungselementen (5;500;550;550A;5000), die betätigt werden können, um die Eingriffselemente voneinander weg zu bewegen,
einem elastischen Element (6; 600; 606; 6000) zum Zurückbringen der Eingriffselemente in die Ruhestellung, nachdem sie durch die Betätigungselemente voneinander weg bewegt worden sind, wobei
die Eingriffselemente (3;300;301;301A;3000) jeweils eine umkehrbare Verhakungseinrichtung (7;700;707;707A; 7000) aufweisen, die in den durch die Eingriffselemente (3) gebildeten Raum (4) gerichtet und so ausgebildet ist, dass sie das Klammerelement beim Auseinanderbewegen der Eingriffselemente (3;300;301;301A;3000) elastisch verformen.

2. Werkzeug (1;100;110;111;111A;1000) gemäß Anspruch 1, wobei der Träger (2;200;250;201;201A;2000) die beiden Eingriffselemente (3;300;301;301A;3000) mittels Stiften (20;220;252;205;2200) drehbar verbindet und hält, von denen sich jeweils einer an jedem der Eingriffselemente befindet, so dass die Elemente durch den Raum (4;400;404;404A;4000) zur Aufnahme des Klammerelements (C) voneinander beabstandet sind.

3. Werkzeug (1;100;111;111A;1000) gemäß Anspruch 2, wobei der Träger (2;200;201;201A;2000) eine Platte mit einem ersten Abschnitt (21;210;202;202A;2210) ist, der zwischen den Eingriffselementen (3;300;301;301A;3000) angeordnet und mit Löchern für die Stifte (20; 220; 2200) versehen ist, und einem zweiten Abschnitt (22; 222; 203; 203A) mit einer Gabel (23; 230; 204;204A; 2300), die einen Raum (24; 240; 404; 404A; 2400) zum Zentrieren des Bolzens (R) begrenzt.

4. Werkzeug (1;100;110;1000) gemäß einem der Ansprüche 1 bis 3, wobei jedes Eingriffselement (3;300;3000) ein Arm ist, der mit einem ersten Ende (30;330), das mit einem Stift (20;220;2200) an dem Träger (2;200;2000) befestigt ist, und einem zweiten Ende (31;310) versehen ist, das an einem Betätigungselement (5;500;5000) befestigt ist.

5. Werkzeug (1;100;1000) gemäß Anspruch 4, wobei das erste Ende (30; 330) mit einer Öffnung (32; 320;3200) zur Aufnahme des Drahtes (W) versehen ist, wobei die Öffnung einen ersten Abschnitt (33) zum Führen des Drahtes aufweist, der in einer halbzylinderförmigen Ausnehmung (34;340) endet.

6. Werkzeug (1) gemäß einem der Ansprüche 1 bis 5, wobei das Betätigungselement (5) zwei als Paar vorgesehene Arme einer Greifvorrichtung ist, wobei die Arme an einem Drehpunkt (50) gelenkig miteinander verbunden sind, von dem entsprechende griffartige Abschnitte (51) ausgehen und in entgegengesetzter Richtung Betätigungsabschnitte (52) an den Eingriffselementen (3) befestigt sind, wobei zwischen dem Drehpunkt und den griffartigen Abschnitten ein elastisches Element (53) angeordnet ist.

7. Werkzeug (100) gemäß einem der Ansprüche 1 bis 5, wobei die Betätigungselemente (500) einen ersten Abschnitt (501), der an dem Eingriffselement (300) befestigt ist, und einen zweiten beweglichen Abschnitt (502) aufweisen, wobei der erste Abschnitt (501) ein erstes Ende (503) zur starren Verbindung mit dem Eingriffselement (300) und ein zweites Ende (504) mit einer Aufnahme (505) zur drehbaren Aufnahme des zweiten beweglichen Abschnitts (502) aufweist.

8. Werkzeug (100) nach Anspruch 7, wobei der bewegliche Abschnitt (502) einen kreisförmigen Querschnitt aufweist, dessen Winkelursprung in dem Mittelpunkt liegt, durch den ein Stift (506) verläuft, der ihn mit dem zweiten Ende (504) des ersten Abschnitts (501) verbindet, wobei der bewegliche Abschnitt (502) ferner eine Kerbe (507) zum Eingriff mit einem Abschnitt der Oberfläche des Pfahls (R) aufweist, der an einem Ende des kreisförmigen Abschnitts vorhanden ist, während ein erstes Ende eines elastischen Elements (508) an dem zweiten Ende des Abschnitts fixiert ist, wobei das zweite Ende des elastischen Elements an dem zweiten Ende (504) des festen Abschnitts (501) des Betätigungselements fixiert ist.

9. Werkzeug (100) gemäß einem der Ansprüche 1, 7 oder 8, ferner mit einem Steuergreifelement (800), das mit einem einstellbaren Anschlagelement (900) versehen ist, das zum Anlegen an den Pfahl (R) geeignet ist.

10. Werkzeug (1000) gemäß einem der Ansprüche 1 bis 5, wobei die Betätigungselemente (5000) jeweils einen ersten Abschnitt (5001), der sich als ein einziges Stück von den Eingriffselementen (3000) in derselben Ebene erstreckt, und einen zweiten Abschnitt (5002) aufweisen, der sich von dem ersten Abschnitt in einer Ebene im Wesentlichen orthogonal zu der Ebene der ersten Abschnitte erstreckt, so dass sie einander zugewandt sind, wobei die zweiten Abschnitte (5002) im Wesentlichen segmentförmig mit einer abgerundeten Kante (5003) ausgebildet sind, die dem Raum zwischen den beiden ersten parallelen Abschnitten zugewandt ist.

11. Werkzeug (1000) gemäß Anspruch 10, wobei die abgerundeten Kanten (5003) einander angenähert oder überlagert sind, um ein erstes Führungselement (5004), das einem Steuergriff (8000) zugewandt ist, und ein zweites Führungselement (5005) zu bilden, das in Bezug auf das erste Führungselement in die entgegengesetzte Richtung weist.

12. Werkzeug (110) gemäß einem der Ansprüche 1, 2 oder 4, wobei der Träger (250) eine Platte mit einem ersten Abschnitt (251) ist, der gleichauf zwischen den Eingriffselementen (300) angeordnet ist, die mit Löchern zum Eingriff mit Stiften (252) zum Verbinden der Eingriffselemente versehen sind, und ein zweiter Abschnitt (253) ist mit einem Ring (254) versehen ist.

13. Werkzeug (111) nach Anspruch 3, wobei der erste Abschnitt (202) des Trägers (201) einstückig mit einem ersten Arm (555) der beiden Betätigungselemente (550) ausgebildet ist, wobei ein zweiter Arm (556) mittels eines Stifts (557) mit einer Drehachse (D-D), die im Wesentlichen orthogonal zu der Achse (Y-Y) verläuft, an dem ersteren angelenkt ist, um den Raum (404) zwischen den Eingriffselementen (301) zu vergrößern, wobei der zweite Arm (556) ferner in einem Druckabschnitt (558) endet, der ausgebildet ist, auf entsprechende Stifte (306) einzuwirken, die von den Eingriffselementen (301) auf der gegenüberliegenden Seite der Öffnung (302) zur Aufnahme des lasttragenden Drahtes (W) vorstehen.

14. Werkzeug (111A) gemäß Anspruch 3, wobei der erste Abschnitt (202A) des Trägers (201A) aus zwei übereinanderliegenden Platten (206A) besteht, die mit einer Nut (207A) versehen sind, in die ein verstellbares Anschlagelement (208A) eingreift, wobei jede Platte mit einem entsprechenden Arm der Gabel (204A) des zweiten Abschnitts (203A) des Trägers (201A) zusammenhängt.

15. Verfahren zum Befestigen eines Elements (C) zum Klammern eines horizontalen Drahtes (W) an einem Pfahl (R) für Pflanzen, mit den folgenden Schritten:
- Bereitstellen eines Klammerelements (C), das einen sattelartigen Abschnitt (C1), zwei gewölbte Enden (C2) des sattelartigen Abschnitts, zwei Längsarme (C3), die sich parallel von den gewölbten Enden erstrecken, und zwei gewölbte Enden (C4) der Arme, die sich gegenseitig kreuzen, aufweist;
- Einsetzen des sattelartigen Abschnitts (C1) auf den Pfahl (R), der senkrecht in den Boden getrieben wird, bis die bogenförmigen Enden (C2) des sattelartigen Abschnitts in den senkrecht und in Kontakt mit dem Pfahl (R) gespannten Draht (W) eingreifen;
- Drücken, mittels des Werkzeugs (1;100;110;111;1000) gemäß einem der Ansprüche 1 bis 14, der Arme (C3) und der gewölbten Enden (C4) des Elements, so dass sie den Pfahl überragen, um von der Seite, an der der Draht auf dem Pfahl aufliegt, auf die gegenüberliegende Seite zu gelangen.

16. Verfahren zum Herstellen eines Gitters zum Stützen von Pflanzenreihen, mit den folgenden Schritten:
- vertikales Einrammen mehrerer Pfähle (R) für Pflanzenreihen in den Boden;
- horizontales Verlegen mindestens eines Metalldrahtes (W) entlang den mehreren Pfählen;
- wiederlösbares Klammern des mindestens einen Metalldrahtes (W) an die mehreren Pfähle (R) mittels eines Klammerelements (C), das mit einem Werkzeug (1;100;110;111) gemäß einem der Ansprüche 1 bis 14 befestigt wird, wobei das Klammerelement einen sattelartigen Abschnitt (C1), zwei bogenförmige Enden (C2) des sattelartigen Abschnitts, zwei Längsarme (C3), die sich parallel von den bogenförmigen Enden erstrecken, und zwei bogenförmige Enden (C4) der Arme, die sich kreuzen, aufweist.

## Revendications

1. - Outil (1;100;110;111;111A;1000) pour le montage d'un élément de serrage (C) pour le serrage réversible d'un fil horizontal (W) sur un tuteur (R) pour végétaux enfoncé verticalement dans le sol, comprenant un support (2;200;250;201;201A;2000) pour une paire d'éléments d'engagement (3;300;301;301A;3000) dudit élément de serrage (C) montés séparément sur ledit support (2;200;250;201;201A;2000) de façon à définir un espace (4;400;404;404A;4000) entre eux afin qu'ils soient appropriés pour être écartés sur le même plan, des éléments d'actionnement (5;500;550;550A;5000) qui peuvent être actionnés pour écarter lesdits éléments d'engagement l'un de l'autre, un élément élastique (6;600;606;6000) pour ramener lesdits éléments d'engagement à la position inopérante après qu'ils ont été écartés l'un de l'autre par lesdits éléments d'actionnement, lesdits éléments d'engagement (3;300;301;301A;3000) comprenant chacun un moyen d'accrochage réversible (7;700;707;707A;7000) dirigé dans l'espace (4) défini par lesdits éléments d'engagement (3) et configuré pour déformer élastiquement ledit élément de serrage lors de l'écartement desdits éléments d'engagement (3;300;301;301A;3000).

2. - Outil (1;100;110;111;111A;1000) selon la revendication 1, dans lequel ledit support (2;200;250;201;201A;2000) relie et supporte de manière rotative la paire d'éléments d'engagement (3;300;301;301A;3000) au moyen de broches (20;220;252;205;2200), une sur chacun des éléments d'engagement de telle sorte que les éléments sont espacés entre eux par ledit espace (4;400;404;404A;4000) pour loger l'élément de serrage (C).

3. - Outil (1;100;111;111A;1000) selon la revendication 2, dans lequel le support (2;200;201;201A;2000) est une plaque avec une première partie (21;210;202;202A;2210) disposée à cheval entre lesdits éléments d'engagement (3;300;301;301A ;3000) et comportant des trous pour lesdites broches (20;220;205;2200), et une seconde partie (22;222;203;203A) comportant une fourche (23;230;204;204A;2300) qui délimite un espace (24;240;404;404A;2400) pour le centrage du tuteur (R).

4. - Outil (1;100;110;1000)) selon l'une quelconque des revendications 1 à 3, dans lequel chaque élément d'engagement (3;300;3000) est un bras comportant une première extrémité (30;330) fixée au support (2;200;2000) par une broche (20;220;2200) et une seconde extrémité (31 ;310) fixée à un élément d'actionnement (5;500;5000).

5. - Outil (1;100;1000) selon la revendication 4, dans lequel ladite première extrémité (30;330) comporte une ouverture (32;320;3200) pour loger ledit fil (W), l'ouverture ayant une première section (33) pour piloter l'introduction du fil se terminant en une cavité de forme semi-cylindrique (34;340).

6. - Outil (1) selon l'une quelconque des revendications 1 à 5, dans lequel ledit élément d'actionnement (5) est une paire de bras d'une pince, les bras étant articulés l'un à l'autre par un pivot (50) duquel partent des parties correspondantes en forme de branche (51) et, dans la direction opposée, des parties d'actionnement (52) fixées aux éléments d'engagement (3), un élément élastique (53) étant interposé entre le pivot et les parties en forme de branche.

7. - Outil (100) selon l'une quelconque des revendications 1 à 5, dans lequel lesdits éléments d'actionnement (500) comprennent une première partie (501) fixée à l'élément d'engagement (300) et une seconde partie mobile (502), la première partie (501) a une première extrémité (503) pour la liaison rigide avec l'élément d'engagement (300) et une seconde extrémité (504) comportant un siège (505) pour loger de manière rotative la seconde partie mobile (502).

8. - Outil (100) selon la revendication 7, dans lequel ladite partie mobile (502) a une forme de section circulaire avec l'origine de l'angle au centre traversé par une broche (506) qui la relie à la seconde extrémité (504) de la première partie (501), la partie mobile (502) comprend en outre une encoche (507) en vue d'un engagement avec une partie de la surface du tuteur (R) obtenue à une extrémité de la section circulaire tandis qu'une première extrémité d'un élément élastique (508) est contrainte à la seconde extrémité de la section, la seconde extrémité de l'élément élastique étant contrainte à la seconde extrémité (504) de la partie fixe (501) de l'élément d'actionnement.

9. - Outil (100) selon l'une quelconque des revendications 1, 7 ou 8, comprenant en outre un élément de préhension de commande (800) comportant un élément d'arrêt réglable (900) apte à venir en butée contre le tuteur (R).

10. - Outil (1000) selon l'une quelconque des revendications 1 à 5, dans lequel lesdits éléments d'actionnement (5000) ont chacun une première partie (5001) qui s'étend d'un seul tenant à partir desdits éléments d'engagement (3000) sur le même plan et une seconde partie (5002) qui s'étend à partir de ladite première partie sur un plan généralement orthogonal au plan des premières parties de façon à se faire face, les secondes parties (5002) étant généralement en forme de segment avec un bord arrondi (5003) orienté vers l'espace entre les deux premières parties parallèles.

11. - Outil (1000) selon la revendication 10, dans lequel lesdits bords arrondis (5003) sont rapprochés ou superposés pour former un premier élément pilote (5004) orienté vers une poignée de commande (8000) et un second élément pilote (5005) orienté dans la direction opposée par rapport au premier élément pilote.

12. - Outil (110) selon l'une quelconque des revendications 1, 2 ou 4, dans lequel ledit support (250) est une plaque comportant une première partie (251) disposée à cheval entre les éléments d'engagement (300) comportant des trous pour l'engagement avec des broches (252) pour relier lesdits éléments d'engagement, et une seconde partie (253) comporte une bague (254).

13. - Outil (111) selon la revendication 3, dans lequel ladite première partie (202) du support (201) est réalisée d'un seul tenant avec un premier bras (555) de ladite paire d'éléments d'actionnement (550), un second bras (556) étant articulé au premier au moyen d'une broche (557) ayant un axe de rotation (D-D) généralement orthogonal à l'axe (Y-Y) pour étendre l'espace (404) entre les éléments d'engagement (301), le second bras (556) se termine en outre par une partie de poussée (558) configurée pour agir sur des broches correspondantes (306) faisant saillie à partir desdits éléments d'engagement (301) sur le côté opposé par rapport à celui de l'ouverture (302) destinée à loger le fil porteur de charge (W).

14. - Outil (111A) selon la revendication 3, dans lequel ladite première partie (202A) du support (201A) consiste en deux plaques superposées (206A) comportant une rainure (207A) engagée par un élément d'arrêt réglable (208A), chaque plaque étant continue avec une branche correspondante de la fourche (204A) de la seconde partie (203A) du support (201A).

15. - Procédé de montage d'un élément (C) pour le serrage d'un fil horizontal (W) sur un tuteur (R) pour végétaux, comprenant les étapes consistant à :
- fournir un élément de serrage (C) comprenant une partie en forme de selle (C1), deux extrémités arquées (C2) de ladite partie en forme de selle, deux bras longitudinaux (C3) qui s'étendent parallèlement à partir desdites extrémités arquées et deux extrémités arquées (C4) desdits bras qui se croisent entre elles ;
- introduire ladite partie en forme de selle (C1) sur le tuteur (R) enfoncé verticalement dans le sol jusqu'à ce que les extrémités arquées (C2) de ladite partie en forme de selle engagent le fil (W) étiré verticalement en contact avec le tuteur (R) ;
- pousser les bras (C3) et les extrémités arquées (C4) de ceux-ci dudit élément en les amenant à franchir le tuteur pour passer du côté où le fil repose sur le tuteur au côté opposé au moyen de l'outil (1;100;110;111;1000) selon l'une quelconque des revendications 1 à 14.

16. - Procédé de construction d'une grille pour supporter des rangées de végétaux comprenant les étapes consistant à :
- enfoncer verticalement dans un sol une pluralité de tuteurs (R) de rangées de végétaux ;
- poser au moins un fil métallique (W) horizontalement le long de ladite pluralité de tuteurs ;
- serrer de manière réversible ledit au moins un fil métallique (W) sur ladite pluralité de tuteurs (R) au moyen d'un élément de serrage (C), monté avec un outil (1;100;110;111) selon l'une quelconque des revendications 1 à 14, ledit élément de serrage comprenant une partie en forme de selle (C1), deux extrémités arquées (C2) de ladite partie en forme de selle, deux bras longitudinaux (C3) qui s'étendent parallèlement à partir desdites extrémités arquées et deux extrémités arquées (C4) desdits bras qui se croisent entre elles.
